# EUROPEAN PATENT SPECIFICATION

(11) **EP 0 431 677 B1**
(45) Date of publication and mention of the grant of the patent: **03.07.1996**
(21) Application number: 90203141.8
(22) Date of filing: 28.11.1990
(51) Int. Cl.: F16H 61/02, F16H 59/02

(54) **Shuttle shifts in powershift transmissions**
Wechselschaltungen in Lastschaltgetrieben
Passages alternatifs sous couple pour des transmissions

(30) Priority: 01.12.1989 US 444312; 29.03.1990 US 501573; 10.05.1990 US 521629; 10.05.1990 US 521630; 10.05.1990 US 521799; 10.05.1990 US 521808; 21.05.1990 US 526157
(43) Date of publication of application: 12.06.1991
(60) Divisional application: 95203370.2
(73) Proprietor: NEW HOLLAND U.K. LIMITED, Basildon, Essex SS14 3AD (GB)
(72) Inventor: Bulgrien, Garth H., Ephrata, PA 17522 (US)
(74) Representative: Vandenbroucke, Alberic

(56) References cited:
- EP-A- 0 122 014
- EP-A- 0 127 949
- EP-A- 0 209 263
- WO-A-90/04225
- FR-A- 2 454 023
- US-A- 4 425 620
- US-A- 4 598 374
- 'Transportation electronics: Proceedings of the International Congress on Transportation Electronics. P-183' October 1986 , SOCIETY OF AUTOMOTIVE ENGINEERS, INC. , WARRENDALE, PA 15096, USA pages 171 - 178 HOLMELIUS 'Scania CAG Computer-Aided Gearshifting'

## Description

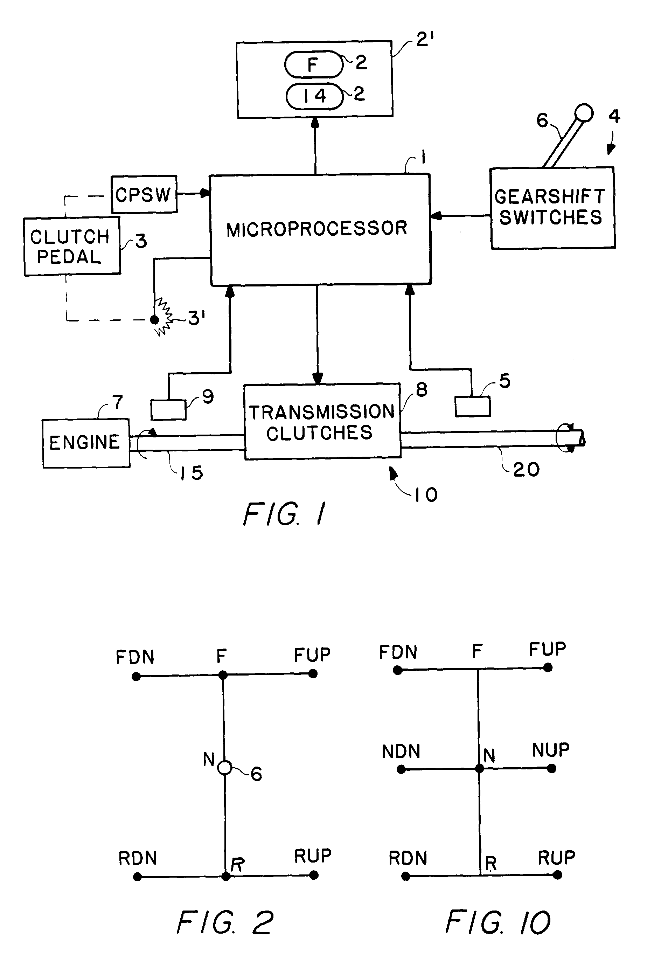

The present invention relates to power shift transmissions for vehicles, such as agricultural tractors. Such transmissions are well known in the art. Normally, a gear selector device comprising a pivotable gearshift lever, is operable to allow the driver to select a desired gear. The gearshift lever shown in WO-A-9.004.225 is arranged pivotally in a first plane between a forward, neutral and reverse position corresponding respectively to the selection of forward gears, no gear shift and reverse gear. At least when in the forward position, the gearshift lever is also pivotable in a second plane, perpendicular to the first plane, to upshift or downshift between forward gears. In the prior art arrangement discussed in Figures 1 and 2 of the following description, upshifting and downshifting is also possible between reverse gears. In EP-A-0.122.014 the gearshift lever is movable from a neutral position to an up- or downshift position to select a desired range of gears whereafter a specific gear in that range has to be selected by further moving the gearshift lever through a commonly known H-pattern. Although all these arrangements operate satisfactorily to select a desired gear, they nevertheless do not allow the operator to preselect a desired gear before actually engaging that gear.

It is therefore an objective of the present invention to provide a method and the means whereby, while the gearshift lever is in neutral, the operator may preselect a desired gear into which the transmission will be shifted upon subsequent movement of the gearshift lever to the forward or the reverse position.

Some power shift transmissions provide shuttle shift capability which permits the vehicle to change direction of operation without requiring the movement of the gearshift lever through each intermediate gear ratio. To accomplish this operation, these known types of shuttle shift transmissions will typically include torque converters. In such transmissions utilizing torque converters for shuttle shifting at high or even moderate speeds, a high energy load is placed on the clutches.

Some power shift transmissions are characterized in that they do not require a different gearshift lever position for each gear ratio which may be selected. While such transmissions have simplified operator control, such transmissions do have drawbacks and lack certain desirable features. For example, these transmissions provide automatic speed ratio matching with no means permitting an operator to intervene manually in the automatic speed ratio matching process.

The operation or response of the transmission clutches vary from one transmission to another, or in a given transmission over a period of time. The present invention alleviates some of these problems and, in addition, provides new methods by which an operator may effect the shuttle shifting process.

A further object of the invention is to provide novel methods of controlling vehicle deceleration during shuttle shifting to thereby reduce the energy input to the clutches. According to a first method of controlling deceleration, clutches in the transmission are set to select the lowest gear and one clutch has a modulating signal applied thereto whereby the transmission and engine act as a brake. The speed of the output shaft is monitored and as it approaches zero the clutches are set to select the desired gear.

In a second method of controlling deceleration, clutches are released to disconnect the transmission from the engine. Next, at least two clutches are set to lock up the transmission. A modulating signal is then applied to one clutch to vary the load the transmission places on the output shaft. The output shaft speed is monitored and as it approaches zero the clutches are selectively energized to select the new gear.

In a third method of controlling deceleration the rotation of the input and output shafts of the transmission are monitored and the clutches are set to the lowest gear which does not overspeed the engine. As the speed of the output shaft drops, successively lower gears are selected.

A further object of the invention is to provide a method whereby an operator may, by operation of the gearshift lever, override a program which provides automatic speed ratio matching during shuttle shifting.

Another object of the invention is to provide a method whereby an operator may pre-program a desired ratio between the forward and reverse gears selected during shuttle shifting.

Yet another object of the invention is to provide a novel method of producing a value representing a calibration signal for a clutch, said calibration signal being added to the clutch modulating signal to provide a uniform operation of the clutch.

According to a first aspect of the present invention a method is provided of controlling the operation of a powershift transmission having an input shaft, an output shaft, a plurality of gears in driving relationship with the input and output shafts and a plurality of clutches operatively associated with the input and output shafts and with said gears and being selectively engageable to drivingly couple the input shaft to the output shaft and to effect a varying of the speed of operation of the output shaft for a given speed of operation of the input shaft; said transmission further also having an electronic controller including a microprocessor operably associated with the transmission for effecting gear changes within this transmission and a control mechanism operably connected to the microprocessor to signal desired gear changes thereto; said control mechanism comprising a gearshift means movable along a first path of travel between a plurality of positions, including forward, reverse and neutral positions and said gearshift means, when in the forward or reverse positions further also being movable along a second path of travel between an upshift sub-position corresponding to a desired upshift gear change and a downshift sub-position corresponding to a desired downshift gear change.

Said method is characterized in that it comprises the steps of :
- preselecting a desired gear by moving the gearshift means between an upshift sub-position and a downshift sub-position when in said neutral position to generate signals representing a desired gear,
- storing said signals, and
- selecting said desired gear by subsequently utilizing the stored signals representing the desired gear to selectively energize the clutches when the gearshift means is moved to the forward position, respectively the reverse position.

According to a second aspect of the present invention, a vehicle is provided having :
- a power source providing operational power for the vehicle;
- a powershift transmission operably coupled with the power source to control the direction and speed of operation of the vehicle;
- an electronic controller operably associated with the transmission for effecting gear changes within this transmission; and
- a control mechanism operably connected to the electronic controller to signal desired gear changes thereto; said control mechanism comprising a gearshift means movable along a first path of travel between a forward position corresponding to a desired forward direction of movement of the vehicle, a reverse position corresponding to a desired reverse direction of movement of the vehicle and an intermediate neutral position and said gearshift means, when in the forward or reverse positions further also being movable along a second path of travel between an upshift sub-position corresponding to a desired upshift gear change, a downshift sub-position corresponding to a desired downshift gear change and an intermediate no-shift sub-position.

The vehicle is characterized in that :
the gearshift means further also is movable between an upshift sub-position and a downshift sub-position when in said neutral position to preselect a desired gear; the arrangement being such that the gearshift means, when in said upshift sub-position or said downshift sub-position, generates signals representing a desired upshift, respectively downshift gear change; said signals being stored by the electronic controller and being subsequently used to select said desired gear when the gearshift means is moved to the forward position, respectively the reverse position.

Other objects of the invention and its mode of operation will become apparent upon consideration of the following description and the accompanying drawings.
Figure 1 is a schematic diagram of a shuttle shift transmission control system of the prior art;
Figure 2 illustrates the shift pattern for a gearshift lever;
Figure 3 is a schematic planar development of the three-dimensional transmission shown in Figures 4-9.
Figure 4 is a schematic plotting of the transmission layout showing the locations of the shaft centers, corresponding to lines 4-4 of Figure 3;
Figure 5 is a schematic plotting of the locations and relationships of the primary drive gear set corresponding to lines 5-5 of Figure 3;
Figure 6 is a schematic plotting of the locations and relationships of the fixed gears mounted on the first, second and third jack shafts corresponding to lines 6-6 of Figure 3;
Figure 7 is a schematic plotting of the locations and relationships of the intermediate gear set mounted on the first, second and third jack shafts corresponding to lines 7-7 of Figure 3;
Figure 8 is a schematic plotting of the locations and relationships of the transfer gears corresponding to lines 8-8 of Figure 3;
Figure 9 is a schematic plotting of the locations and relationships of the final drive gear set corresponding to lines 9-9 of Figure 3;
Figure 10 illustrates a gearshift pattern according to one aspect of the present invention;
Figure 11 is a flow diagram of a program executed by the microprocessor of Figure 1 to preselect a gear;
Figure 12 is a flow diagram illustrating a method of preselection of a forward to reverse gear ratio prior to starting a vehicle;
Figure 13 is a subroutine for the preselection of a forward to reverse gear ratio;
Figures 14A and 14B illustrate routines for selecting reverse and forward gears, respectively, using the ratio developed by the subroutine of Figure 13;
Figure 15 is a flow diagram illustrating a first method of controlling vehicle deceleration during the shifting of gears;
Figure 16 is a flow diagram illustrating a second method of controlling vehicle deceleration during the shifting of gears;
Figure 17 is a flow diagram illustrating a third method of controlling vehicle deceleration during the shifting of gears;
Figure 18 is a flow diagram illustrating a first method of calibrating clutches;
Figure 19 is a flow diagram illustrating a second method of calibrating clutches; and
Figures 20A and 20B are flow diagrams illustrating methods for manually overriding the automatic ratio matching feature for a power shift transmission, the method of Figure 20B resulting in a temporary override for a specific interval of time.

Figures 1-9 illustrate a power shift transmission system of the prior art. As shown in Figure 1, the power shift transmission control system includes a microprocessor 1, a display 2 on an operator's control panel 2', a plurality of gearshift switches 4 which are selectively actuated by manually moving a gearshift lever 6, and a plurality of transmission clutches 8 associated with a transmission 10 which transmits power from a rotating power input shaft 15 to a power output or vehicle drive shaft 20. An engine 7 unidirectionally rotates shaft 15 and a sensor 9 senses rotation of shaft 15 to provide output signals indicating the speed of engine 7. A sensor 5 senses rotation of shaft 20 to provide output signals representing vehicle speed. An operator-actuated clutch pedal 3 controls a potentiometer 3' and the output signal from the potentiometer 3' is applied to microprocessor 1 to develop modulating signals which are applied to a final set of clutches in transmission 10. The clutch pedal 3 also actuates a clutch pedal switch CPSW when the pedal is depressed to its limit of travel. The control system is admirably suited for controlling the transmission of a tractor but it will be obvious from the following description that it may also be used to control the transmissions of other vehicles or machines.

The gearshift switches 4 are Hall-effect switches or similar devices which are actuated by a magnet or magnets carried on the gearshift lever 6. Microprocessor 1 periodically samples the clutch pedal switch, the output of potentiometer 3', the switches 4, and the outputs of the speed sensors 5 and 9, and in response to the sensed conditions controls transmission clutches 8 to "select gears", i.e. select the direction and rate of rotation of output shaft 20 relative to input shaft 15.

Figure 2 is a plan view of the path over which the gearshift lever 6 may be manually moved to selectively actuate the gearshift switches 4. The lever 6 is shown in the neutral position N. In this position the microprocessor controls the transmission clutches 8 so that no power is transmitted from input shaft 15 to output shaft 20. The microprocessor also controls the display 2 so that the letter N is displayed, indicating to the operator that the transmission is in neutral.

The gearshift lever 6 may be moved forwardly (upwardly in Figure 2) from the neutral position to a forward position F. When the microprocessor senses that the gearshift lever is the forward position it energizes clutches 8 so that rotation of the power input shaft is transmitted to the output shaft in one of eighteen different forward speed ratios. The manner in which this is accomplished will be evident from the description of transmission 10 set forth below. At the same time, the microprocessor sends signals to display 2 so that it displays the letter F and a numeric value between one and eighteen. The display thus indicates to the operator that his transmission is in a forward gear, and further indicates which gear.

When the gearshift lever 6 is in the forward position F it may be moved laterally to change forward gears. When the gearshift lever 6 is moved to its rightmost extent of travel in the forward position it actuates a switch. This position is designated the FUP position. The microprocessor 1 periodically samples the switches 4 and, when the gearshift lever 6 is in the FUP position, the microprocessor periodically changes the clutches 8 which are energized so that the speed ratio between output shaft 20 and input shaft 15 increases. When the highest forward gear (18) is reached, the microprocessor continues to energize the clutches 8 to keep the transmission in this gear (18) even though the gearshift lever 6 continues to actuate the FUP switch. As the microprocessor 1 controls the transmission clutches 8 it also controls the display 2 to indicate forward gear (F) and which forward gear (1-18) the transmission is in.

In like manner, the gearshift lever 6 may be moved laterally to the left in the forward position to downshift the transmission. In the forward downshift position FDN the lever 6 actuates one of gearshift switches 4. The microprocessor periodically downshifts the transmission 10 by controlling clutches 8, and as the transmission is shifted downwardly the microprocessor controls display 2 to indicate that the transmission is in forward gear and which forward gear. By holding the lever 6 in the forward downshift position the operator may downshift the transmission one gear at a time until forward gear (1) is reached. At this time, the microprocessor continues to output signals to the transmission clutches 8 to select forward gear (1) even though the gearshift lever 6 is held in the FDN position. When the gearshift lever 6 is in the reverse position R, it may be moved laterally to the right to increase the reverse gear speed ratio of transmission 10, or moved laterally to the left to decrease the reverse gear speed ratio. At each limit of travel, designated the RUP and RDN positions respectively, gearshift switches 4 are actuated to control the microprocessor 1 for upshifting or downshifting the reverse gear speed. As long as the gearshift lever is in the reverse position the display 2 displays the letter R to indicate reverse gear and also displays a number between (4) and (12) indicating which reverse gear the transmission is in. There are 9 reverse gears, the lowest being fourth gear and the highest being twelfth gear.

The gearshift lever 6 is biased so that if it is in the FUP or FDN position it returns to the F position when manual force is removed. In like manner, if the lever is in the RUP or RDN position and force is removed, the lever returns to the R position. In addition, the gearshift lever 6 is provided with a lift collar (not shown). In shifting between the forward and reverse gear positions, the collar must be lifted. Otherwise, movement of the gearshift lever is stopped at the neutral position.

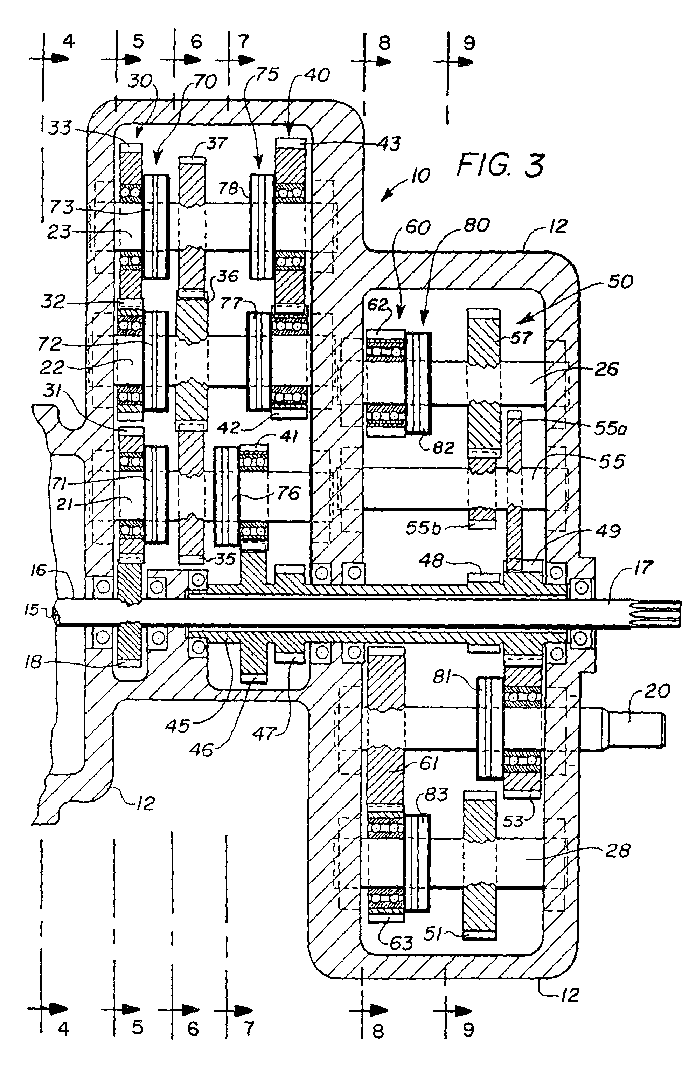

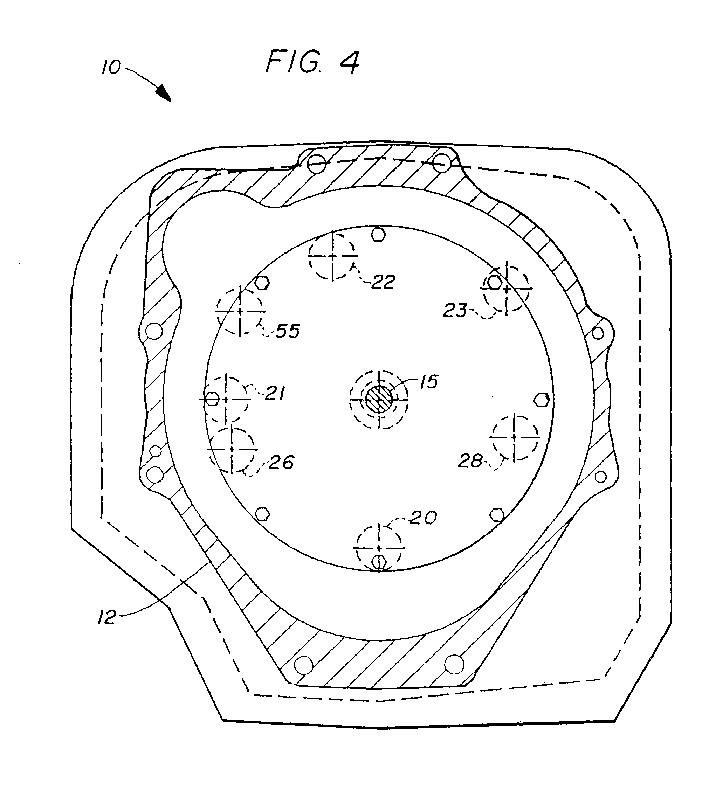

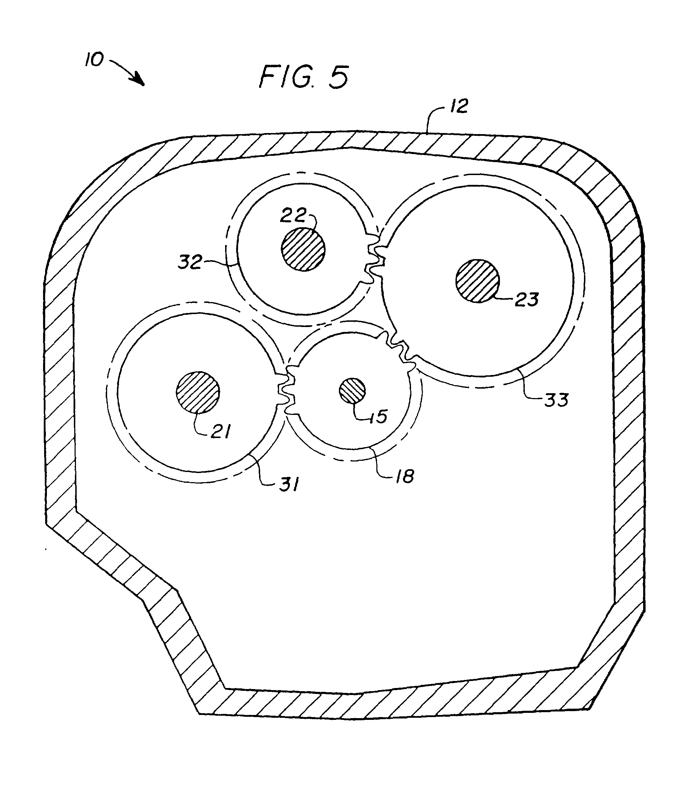

Figures 3-9 illustrate details of the transmission 10. As shown in Figures 3 and 4, the transmission 10 includes an exterior casing 12 forming a framework for supporting the power input shaft 15 rotatably journalled on the casing 12 at a central location extending entirely through the transmission 10 from an engine end 16, which receives rotational power directly from the engine 7, to a drive end 17 at the opposing end of the transmission 10, which can be used as a power takeoff shaft. The centers of a power output shaft 20, a first jack shaft 21, a second jack shaft 22, a third jack shaft 23, a fourth jack shaft 26, a fifth jack shaft 28, and the shaft 55 of a double transfer gear are located in Figure 4. Each of shafts 20, 21, 22, 23, 26, 28 and 55 is journalled by bearings rotatably supporting the respective shafts for rotation within the casing 12. The relationships between these various shafts and the gears mounted thereon are described in greater detail below in conjunction with Figures 3 and 5-9. Referring now to Figures 3 and 5, it can be seen that the power input shaft 15 is provided with a drive pinion 18 splined thereto for rotation therewith at the engine end 16 of the power input shaft 15. The drive pinion 18 is drivingly engaged with a primary drive gear set 30. More specifically, the drive pinion 18 is directly engaged with a first drive gear 31 rotatably mounted on the first jack shaft 21 for rotation independently of said first shaft 21. The drive pinion 18 is also directly engaged with a third drive gear 33 rotatably mounted on the third jack shaft 23 for rotation relative thereto. The third drive gear 33 is meshed in engagement with a second drive gear 32, which in turn is rotatably mounted on the second jack shaft 22. Each of the drive gears 31, 32 and 33 is journalled by bearings mounted on their respective jack shafts and driven by the power input shaft 15 by virtue of direct or indirect engagement with the drive pinion 18. Each of the drive gears 21, 22 and 23 is sized differently to provide different speeds of rotation thereof when rotated by the drive pinion 18.

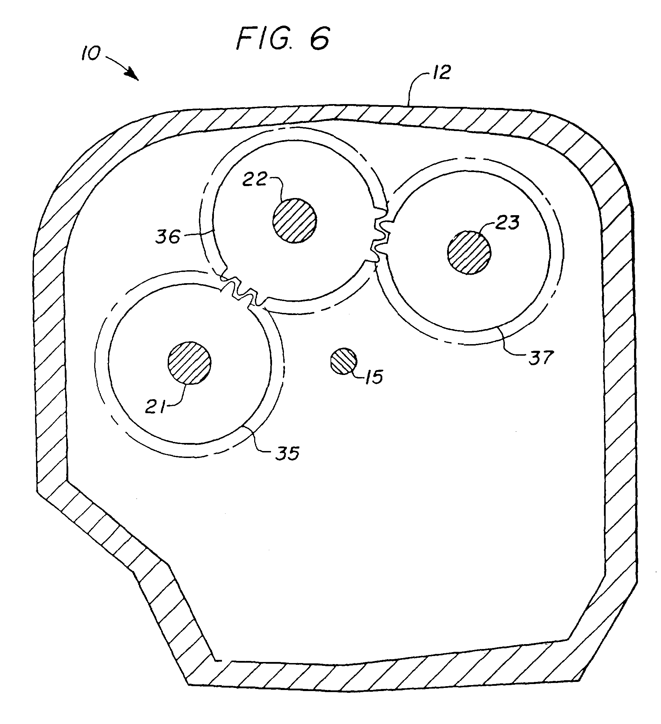

As can be seen in Figures 3 and 6, each of the jack shafts 21, 22 and 23 is provided with a corresponding fixed gear 35, 36 and 37, respectively. The second fixed gear 36 is drivingly engaged with both the first fixed gear 35 and the third fixed gear 37 so that the rotation of any one of the jack shafts 21, 22 and 23 will effect a simultaneous rotation of all the other jack shafts 21, 22 and 23. Since all the fixed gears 35, 36 and 37 are identical in size, the first jack shaft 21, the second jack shaft 22 and the third shaft 23 will rotate at identical speeds.

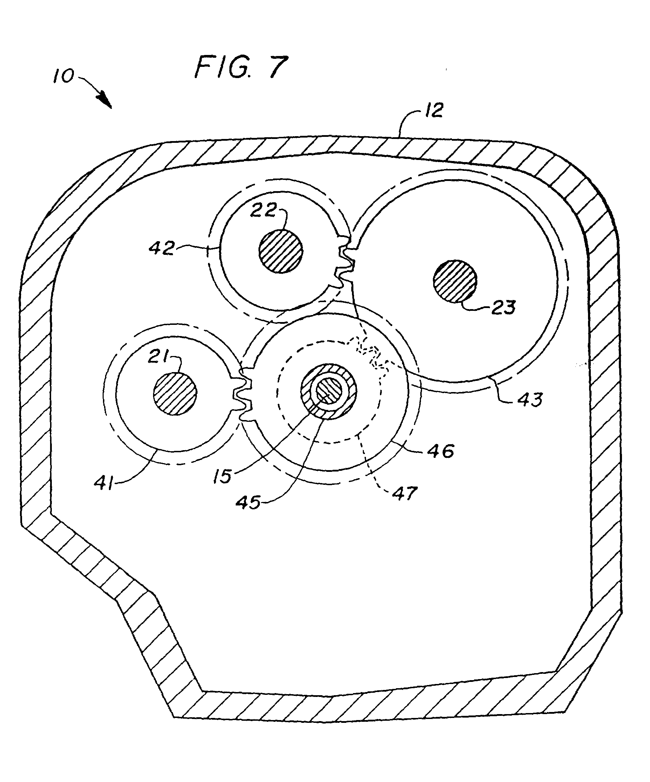

As shown in Figures 3 and 7, the transmission 10 is also provided with an intermediate gear set 40 corresponding to the primary drive gear set 30 and including a first intermediate gear 41 mounted on the first jack shaft 21 for rotation relative thereto, a second intermediate gear 42 rotatably mounted on the second jack shaft 22, and a third intermediate gear 43 rotatably supported on the third jack shaft 23. The intermediate gears 41, 42 and 43 are differently sized to effect a different speed ratio particularly when combined with the differently sized drive gears 31, 32 and 33 of the primary drive gear set 30, as will be described in greater detail below. The first and third intermediate gears 41, 43 are engaged with a transfer hub assembly 45 as will be described below, while the second intermediate gear 42 is drivingly engaged with the third intermediate gear 43. Like the primary drive gear set 30, each intermediate gear 41, 42 and 43 is journalled by bearings mounted on the corresponding jack shaft 21, 22 and 23 to permit independent rotation therebetween.

The intermediate gear set 40 is engaged with a transfer hub assembly 45 rotatably supported from the casing l2 concentric with the power input shaft 15. The transfer hub assembly 45 includes a first transfer gear 46 drivingly engaged with the first intermediate gear 41 and a second transfer gear 47 drivingly engaged with the third intermediate gear 43. The transfer hub assembly 45 is also provided with a co-joined third transfer gear 48 and fourth transfer gear 49 to transfer rotational power from the intermediate gear set 40 to a transfer gear set 50.

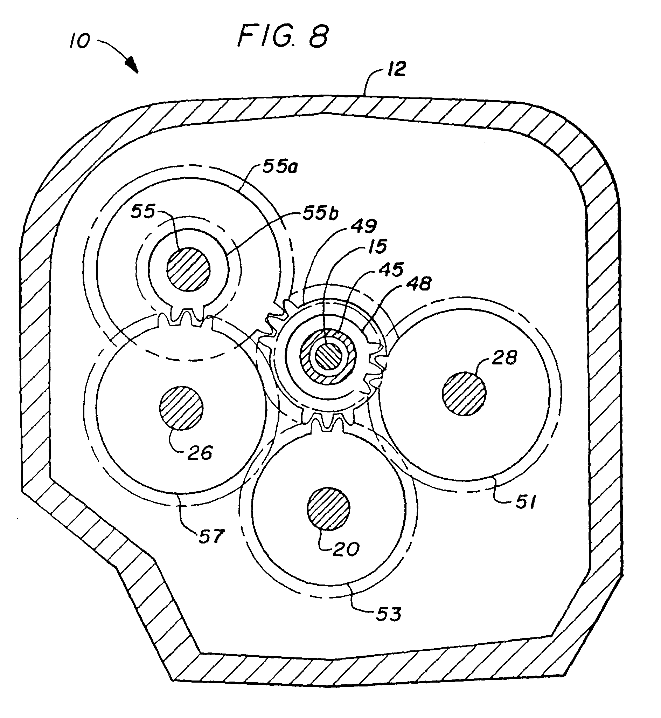

Referring to Figures 3 and 8, the third transfer gear 48 is drivingly engaged with a reverse transfer gear 51 fixed to a fifth jack shaft 28 rotatably supported in the casing 12. Likewise, a high-speed transfer gear 53 is rotatably journalled on the power output shaft 20 and is drivingly engaged with the fourth transfer gear 49 for rotation therewith independently of the power output shaft 20. A double transfer gear 55 having a shaft-like configuration and integral gear members 55a and 55b is rotatably supported in the casing 12. The gear member 55a is also drivingly engaged with the fourth transfer gear 49, while the other gear member 55b is engaged with a low-speed transfer gear 57 fixedly secured for rotation with a fourth jack shaft 26 rotatably journalled in the casing 12.

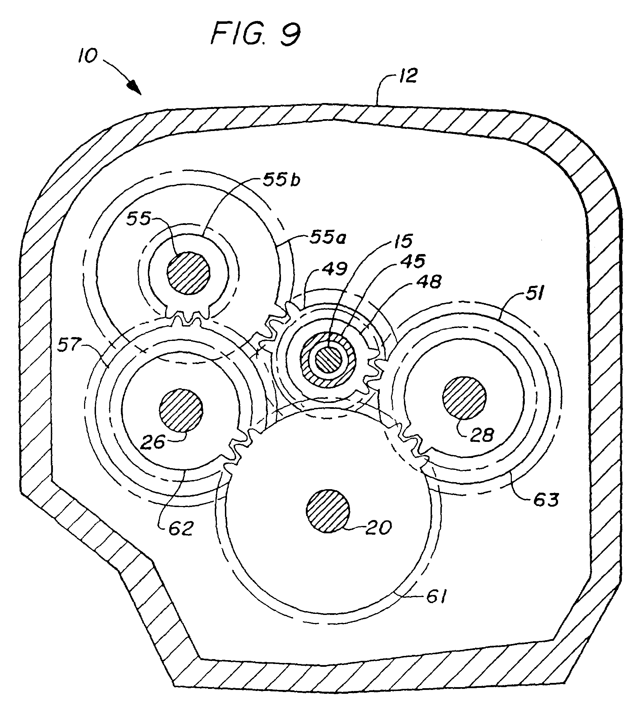

As can be best seen in Figures 3 and 9, a final drive gear set 60 includes a high-speed final gear 61 rigidly secured to the power output shaft 20 for rotation therewith, a low-speed final gear 62 rotatably journalled by bearings on the fourth jack shaft 26 for rotation independently relative thereto, and a reverse final gear 63 rotatably journalled on the fifth jack shaft 58 for rotation relative thereto. The final drive gear set 60 is interengaged for simultaneous rotation such that the high-speed final gear 61 fixed to the power output shaft 20 is operatively intermeshed with both the low-speed final gear 62 and the reverse final gear 63.

Referring now to Figure 3, the transmission includes three clutch sets 70, 75 and 80 operable to effect rotation of the various gears rotatably mounted on jack shafts with the corresponding shaft. The initial clutch set 70 includes a first clutch 71 mounted on the first jack shaft 21, a second clutch 72 mounted on the second jack shaft 22 and a third clutch 73 mounted on the third jack shaft 23. Each clutch 71, 72 73 of the initial clutch set 70 is operable to engage the corresponding drive gear 31, 32 and 33 to effect rotation of the corresponding jack shaft 21, 22 and 23 with the corresponding drive gear 31, 32 and 33 at the speed the corresponding drive gear is rotating. Likewise, an intermediate clutch set 75 includes first, second and third intermediate clutches 76, 77 and 78, respectively, mounted on the first, second, and third jack shafts 21, 22 and 23, respectively, for engagement with the corresponding intermediate gear 41, 42 and 43 to effect rotation of the corresponding intermediate gear 41, 42 and 43 at the speed at which the corresponding jack shaft is being driven.

A final clutch set 80 includes a high-speed final clutch 81 mounted on the power output shaft 20 and engageable to couple the high-speed transfer gear 53 to the high-speed final gear 61 when so engaged. The final clutch set 80 also includes a low-speed final clutch 82 mounted on the fourth jack shaft 26 to effect a coupling, when engaged, between the low-speed transfer gear 57 and the low-speed final gear 62. Likewise, the final clutch set 80 also includes a reverse final clutch 83 mounted on the fifth jack shaft 28 for selectively coupling the reverse transfer gear 51 to the reverse final gear 63. To attain any given speed of rotation of the power output shaft 20 for a given speed of rotation of the power input shaft, only one selected clutch of each clutch set 70, 75, 80 is engaged at a time. The engagement of two clutches of any one clutch set 70, 75 and 80 will have the effect of locking the transmission 10.

With all of the components of the transmission 10 situated as described above, transmission 10 can transmit a given engine speed received by the engine end 16 of the power input shaft 15 to the output shaft 20 in twenty-seven different speed variations with eighteen forward speeds and nine reverse speeds. It can be seen that the drive pinion 18 constantly delivers rotational power from the engine to the primary gear set 30 such that the first, second, and third drive gears 31, 32 and 33 are constantly driven with the drive pinion 18 relative to the respective jack shaft 21, 22 and 23 on which the gears of the primary drive gear set 30 are respectively mounted. The engagement of one of the clutches 71, 72 and 73 of the initial clutch set 70 effects an engagement of the corresponding drive gear 31, 32 or 33 with the respective jack shaft 21, 22 or 23 and effects rotation of the jack shafts 21, 22 and 23 at the speed at which the corresponding drive gear is being rotated. Since the intermeshed fixed gears 35, 36 and 37 are of identical size, rotation of any one of the jack shafts 21, 22 and 23 will effect rotation of all three jack shafts 21, 22 and 23 at identically the same speed as the drive gear 31, 32 and 33 engaged by the selected clutch of the initial clutch set 70.

The engagement of one of the clutches of the initial clutch set 70 will effect a corresponding rotation of the first, second, and third jack shafts 21, 22 and 23 at a selected speed corresponding to the corresponding drive gear from the primary drive gear set 30. A subsequent engagement of one of the clutches 76, 77 and 78 of the intermediate clutch set 75 will effect an engagement between the corresponding intermediate gear from the intermediate gear set 40 with the rotating jack shaft corresponding to the selected intermediate clutch at the speed at which the jack shafts 21, 22 and 23 are rotating. Since all of the intermediate gears of the intermediate gear set 40 are engaged with the transfer hub assembly 45, directly or indirectly, which in turn is engaged with the transfer gear set 50, an engagement of one of the clutches of the intermediate clutch set 75 will effect a rotation of all gears of the intermediate gear set 40, the transfer hub assembly 45, all of the transfer gears 46, 47, 48 and 49 and all of the gears in the transfer gear set 50, as well as the corresponding rotation of both the fourth and fifth jack shafts 26, 28 due to a fixed engagement with the corresponding transfer gears 51, 57.

Finally, an engagement of one of the clutches 81, 82 and 83 of the final clutch set 80 will transfer rotational power from the corresponding transfer gear to the corresponding final gear 61, 62 and 63 of the final drive gear set 60 to cause a rotation of the power output shaft 20 at the speed ratio corresponding to the combination of the respective gears engaged by the activated clutches of the clutch sets 70, 75 and 80.

By way of specific example, the engagement of the second clutch 72 of the initial clutch set 70 will couple the second drive gear 32 to the second jack shaft 22 and effect rotation of the first, second, and third jack shafts 21, 22 and 23 at the speed at which the second drive gear 32 is being rotated due to engagement with the third drive gear 33 and the driving engagement of the third drive gear 33 with the drive pinion 18. In the example being described, both the first and third drive gears 31, 33 rotate on the corresponding jack shaft 21, 23 without transferring rotational power thereto. In fact, the engagement of the second clutch 72 will result in a rotation of both the first and third jack shafts 21 and 23 at a speed different than the speed at which either of the corresponding first and third drive gears 31, 33 is independently rotating.

By way of continuing the example started above, the subsequent engagement of the first intermediate clutch 76 drivingly couples the first intermediate gear 41 with the rotating first jack shaft 21 to effect a corresponding rotation of the entire intermediate gear set 40 due to the intermeshed engagement with the first transfer gear 46 and resultant rotation of the second transfer gear 47 co-joined therewith, which in turn independently rotates the second and third intermediate gears 42, 43 on respective jack shafts 22 and 23. As noted with the exemplary description above with respect to the primary drive gear set 30, the intermediate gears 42, 43 rotate independently of the jack shafts 22 and 23 without driving engagement therebetween because the corresponding clutches 77 and 78 have not been engaged.

As noted above, the rotation of the transfer gears 46 and 47 cause a corresponding rotation of the entire transfer hub assembly 45 and effect a corresponding rotation of the entire transfer gear set 50, as well as the fourth and fifth jack shafts 26 and 28. The selected combination of the second drive gear 32 and the first intermediate gear 41 effects rotation of the reverse transfer gear 51, the high-speed transfer gear 53, and the low-speed transfer gear 57 at a preselected ratio. As one skilled in the art will readily realize, the different combinations of engagements between the primary drive gear set 30 and the intermediate gear set 40 provide for nine different speed ratios at which the transfer gears 51, 53 and 57 are rotated.

Continuing the example started above, a final selection of the low-speed final clutch 82 will couple the fourth jack shaft 26 and the integral low-speed transfer gear 57 to the low-speed final gear 62. The intermeshed engagement between the low-speed final gear 62 and the high-speed final gear 61 will effect a rotation of the power output shaft 20 at the predetermined speed corresponding to the combination of clutch engagements described above. Since the reverse final clutch 83 remains disengaged, the reverse final gear 63 can rotate harmlessly on the fifth jack shaft 28 due to the engagement with the high-speed final gear 61. If, in the example given above, the high-speed final clutch 81 had been selected for engagement rather than the low-speed final clutch 82, the high-speed final clutch 81 would have coupled the high-speed transfer gear 53 to the high-speed final gear 61 to directly power the rotation of the power output shaft 20. The engagement of the high-speed final clutch 81 means that neither the low-speed final clutch 82 nor the reverse final clutch 83 is engaged so low-speed final gear 62 and the reverse final gear 63 can rotate harmlessly on the respective jack shafts 26 and 28 on which they are mounted due to engagement with the high-speed gear 61.

The various combinations of the engagement of gears of both the primary drive gear set 30 and the intermediate gear set 40 provides nine possible speed ratios for rotation of the individual gears 61, 62 and 63 of the final drive gear set 60. Accordingly, the above-described transmission will provide nine different low-range speeds for rotation of the power output shaft 20 when the low-speed final clutch 82 is engaged, as well as nine different high-range speeds when the high-speed final clutch 81 is selected, or nine different speeds of reverse rotation of the power output shaft 20 if the reverse final clutch 83 is engaged.

The torque transmitting elements of the clutches in transmission 10 are hydraulically actuated to transfer torque. Solenoid operated valves control the pressure applied to the clutches and thus the torque transferred to the output shaft 20 to move the vehicle.

The electrical signals applied to the solenoids for the clutches 81, 82 and 83 in the final clutch set 80 may be modulated to incrementally vary the pressure applied to the torque transmitting elements. As the clutch pedal 3 is depressed, the magnitude of the signal applied to microprocessor 1 from the potentiometer 3' varies. Using this signal, the microprocessor develops a pulse width modulated signal that is applied to the solenoid of one of the clutches 81, 82 or 83 depending on which gear the transmission is in. When the clutch pedal 3 is fully depressed, it actuates the clutch pedal switch CPSW. When microprocessor 1 senses that CPSW is actuated it applies a signal to the solenoid of one of the clutches 81, 82 or 83 so that no hydraulic pressure is applied to the torque transmitting element of the clutch and no torque is transmitted by the clutch.

### Preselection of Gears

In accordance with one aspect of the present invention, a gear speed may be selected any time the gearshift lever 6 is in the neutral position. Since the gearshift lever 6 must be in neutral, the operator may devote full attention to the gear selection process without compromising safety.

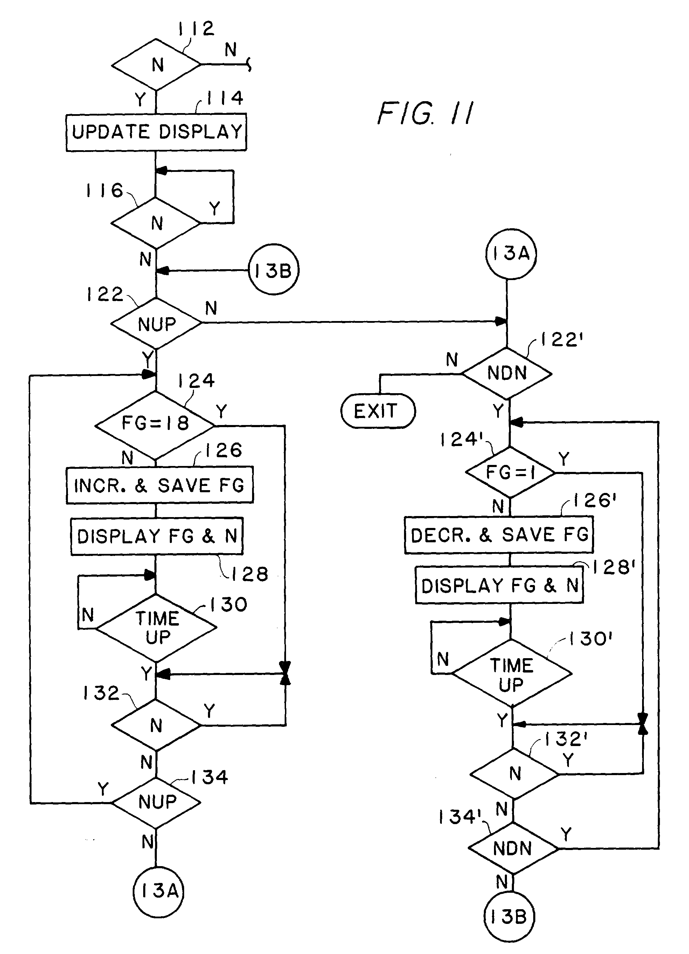

Preselection of a gear speed is made possible by providing for lateral movement of the gearshift lever 6 in the neutral position as illustrated in Figure 10. At its leftmost or rightmost extent of travel, designated the NDN and NUP positions, respectively, the gearshift lever 6 actuates gearshift switches 4 to signal microprocessor 1 that it is in the NDN or NUP position.

Briefly, the operator accomplishes preselection of gears by placing the gearshift lever in neutral and selectively moving the gearshift lever between the NUP, NDN and N positions to increment or decrement the displayed gear value until it agrees with the gear he wishes to select.

Figure 11 is a flow diagram of a suitable routine which may be executed by microprocessor 1 to effect preselection of gears. The routine is entered at step 112 when the microprocessor 1 senses that the gearshift lever 6 is in the N position. The display 2 is updated at step 114. At step 116 the program waits for the operator to move the gearshift lever to the NUP or NDN position. At this point the display 2 will be displaying the letter N and a value representing the contents of a register PSG. The register PSG is a memory location in microprocessor 1 which stores a value representing the gear last preselected.

Assume first that the operator wishes to increase the preselected gear value PSG to some value greater than the value being displayed by display 2. He moves the gearshift lever from the N position to the NUP position to exit step 116.

At step 122 the microprocessor 1 tests the gearshift switches 4 to see if the gearshift 6 lever is in the NUP position. If the operator has moved the gearshift lever 6 to the NUP position, signifying that he wishes to preselect a higher numbered gear than that being displayed, the test at step 122 proves true. The program advances to step 124 where the value of PSG is tested. If the value is less than (18), the test at step 124 proves false and the program moves to step 126 where the value in the PSG register is incremented by one and saved. At step 128 the display is updated to display the new value in PSG.

After the display is updated, the program waits at step 130 for a fixed interval of time, in the order of a fraction of a second. This wait provides time for the operator to react and move the gearshift lever out of the NUP position as the value in the PSG register approaches the gear speed the operator wishes to select.

At step 132 the gearshift lever switches 4 are tested to determine if the operator has moved the gearshift lever to the N position. Assuming he has not, the test at step 132 proves false and the subsequent test for the NUP position at step 134 proves true. The program branches back to step 124 to again test the value in the PSG register and, if it is not (18), increment it at step 126 and display the updated value at step 128.

As the displayed value of the PSG register approaches the forward gear which the operator wishes to select, he may move the gearshift lever to the N position in anticipation of stopping the incrementing of the PSG register when the PSG register is at the desired value. When he does this, the program, when it reaches step 132, senses that the gearshift lever 6 is in the N position and waits.

The program continues to execute step 132 as long as the operator leaves the gearshift lever 6 in the N position. This enables him to observe the displayed preselected gear value and determine if it is higher, lower, or equal to the gear he wishes to select. Assuming first that the displayed value is lower than the desired speed, the operator may again move the gearshift lever 6 to the right to the NUP routine. The program advances from step 132 through step 134 and back to step 124 again so that incrementing of the value in the PSG register is resumed.

If the gearshift lever 6 is held too long in the NUP position, the value in the FG register will reach a count of (18) corresponding to the highest forward gear. When this happens, the test at step 124 proves true and the program branches directly from step 124 to step 132 so that the steps 124, 132 and 134 are repeatedly executed as long as the gearshift lever 6 is held in the NUP position.

If the operator should overshoot the value of the gear he wishes to preselect, he may reduce the value PSG by moving the gearshift lever 6 to the NDN position. For example, assume that the operator desired to preselect gear (9) but for some reason he holds the gearshift lever in the NUP position too long so that the PSG register is incremented to some value greater than (9) before the operator returns the lever to the N position. At this point the display 2 is displaying the higher value and the program is repeatedly executing step 132. When the operator moves the gearshift lever 6 to the NDN position the program advances to step 134 and tests the gearshift switches 4 to see if the gearshift lever 6 is in the NUP position. Since it is not, the program advances to step 122' and tests to see if the gearshift lever 6 is in the NDN position. Since it is, the program moves to step 124' where it tests the value in the PSG register. If the value is not (1) (representing the lowest forward gear) it is decremented at step 126' and the display is updated at step 128'.

The program then waits at step 130' for a fraction of a second to give the operator time to move the gearshift lever 6 to the N position if the displayed value of PSG is the forward speed which the operator wishes to select. At step 132' the gearshift switches 4 are tested to see if the gearshift lever 6 is in the N position. If the operator is still holding the gearshift lever 6 in the NDN position, the program advances to step 134' and loops back to step 124' in preparation for again testing the value PSG and decrementing it if it is not (1).

If necessary, the operator may again increment the value PSG by moving the gearshift lever 6 to the N position and then to the NUP position. The program moves from step 132' to step 134' and then through step 122 to step 124. From this point the incrementing of PSG takes place as previously described.

It will be noted that the program steps in the right half of Figure 11 are a mirror image of the program steps shown in the left half. The steps in the left half are executed when the gearshift lever 6 is selectively moved between the NUP and N positions to increment the value PSG and the steps in the right half are executed as the gearshift lever 6 is selectively moved between the NDN and N positions to decrement the value PSG. If the operator has completed his preselection of a gear, he may exit the routine by moving the gearshift lever 6 to the F or the R position. When the program reaches step 132 and the gearshift lever 6 is in the F or R position, the program sequentially executes steps 132, 134 and 122', then exits the routine. On the other hand, if the program reaches step 132' and the gearshift lever 6 is in the F or R position, the program sequentially executes steps 132', 134' and 122 before executing step 122' and exiting the routine.

The operations described above enable the operator to preselect a single value of PSG. This value determines both the forward gear and the reverse gear which will be selected when the operator moves the gearshift lever 6 from the N position to the F or R position. However, the value of PSG may be also used to access a table of reverse gear values to obtain a preselected reverse gear. Generally, if PSG is greater than the highest reverse gear (12) PSG accesses a location in the table which stores the value (12), and if PSG is less than the lowest reverse gear (4) PSG accesses a location in the table which stores the value (4). For values between (4) and (12), PSG accesses a table location storing a corresponding value.

### Programmable Forward-To-Reverse Speed Selection

Different applications for shuttle shifting have different requirements for the forward-to-reverse speed relationship. That is, some applications may be best performed when the reverse speed is faster than the forward speed while others may be best performed when the forward speed is faster than the reverse speed, and still other applications are best performed when the speeds are equal.

In accordance with the principles of the present invention, an operator may select any one of several modes of operation. That is, he may program microprocessor 1 by operation of the gearshift lever 6 to provide any one of several reverse gear speeds relative to a forward gear speed. The relationships are as follows:
R4 (lowest reverse gear) selected regardless of forward gear.
Reverse gear the same speed as forward gear.
Reverse gear 1, 2 or 3 gears faster than forward gear.
Reverse gear 1, 2 or 3 gears slower than forward gear.

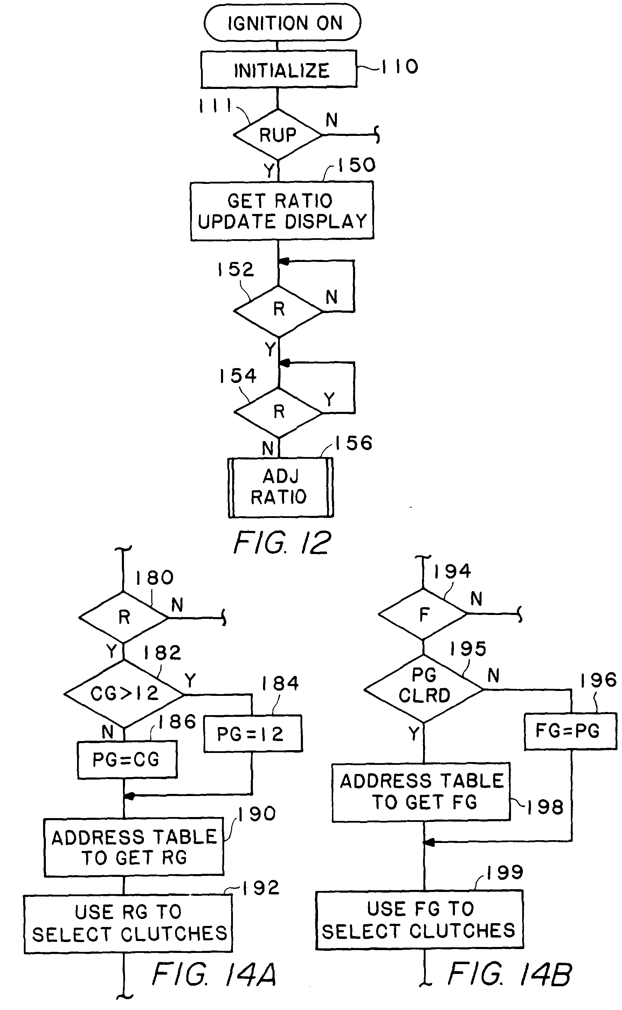

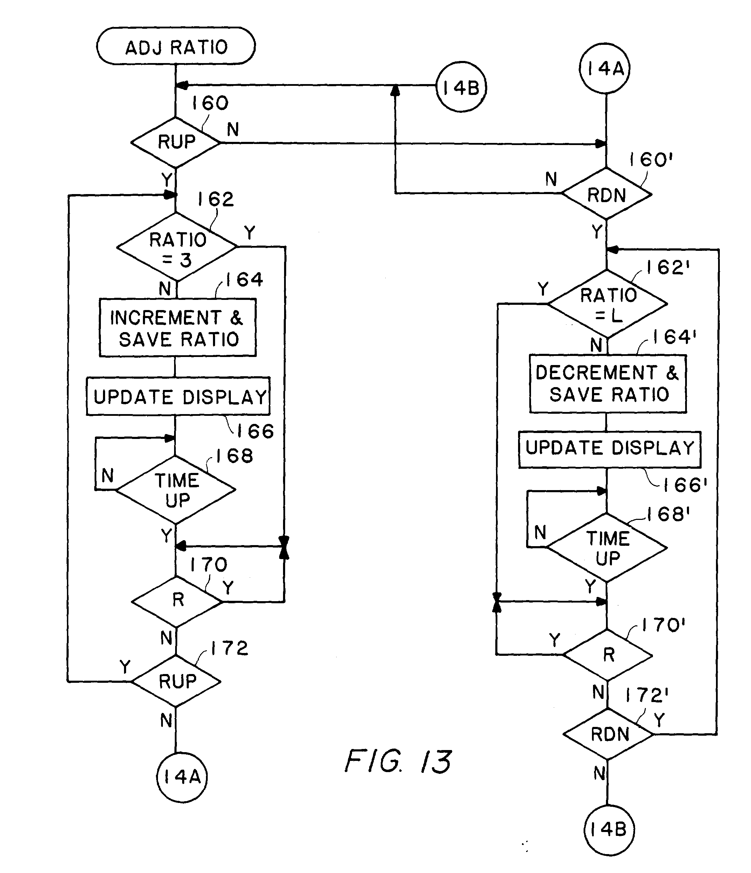

Figures 12 and 13 illustrate a method whereby, prior to starting the engine, an operator may select a value representing a desired one of these forward speed to reverse speed relationships. A ratio value is generated and stored and subsequently used by the microprocessor 1 so that a specific forward to reverse speed relationship is obtained by shuttle shifting between forward and reverse after the engine is started. That is, during operation of the vehicle the operator controls the selection of forward gear speed while reverse gear speed automatically is determined by the selected forward gear and the value RATIO which is preselected prior to starting the engine.

The operator initiates the forward-to-reverse speed programming mode by holding the gearshift lever 6 in the reverse upshift position (RUP) while turning on the ignition key. After going through an initialization routine at step 110, the microprocessor 1 tests the gearshift switches 4 at step 111 to see if the gearshift lever 6 is in the RUP position. If it is, the program branches to step 150 where it gets RATIO and updates the display 2.

RATIO is a value stored in a non-volatile memory location. It represents the relationship of reverse gear to forward gear.

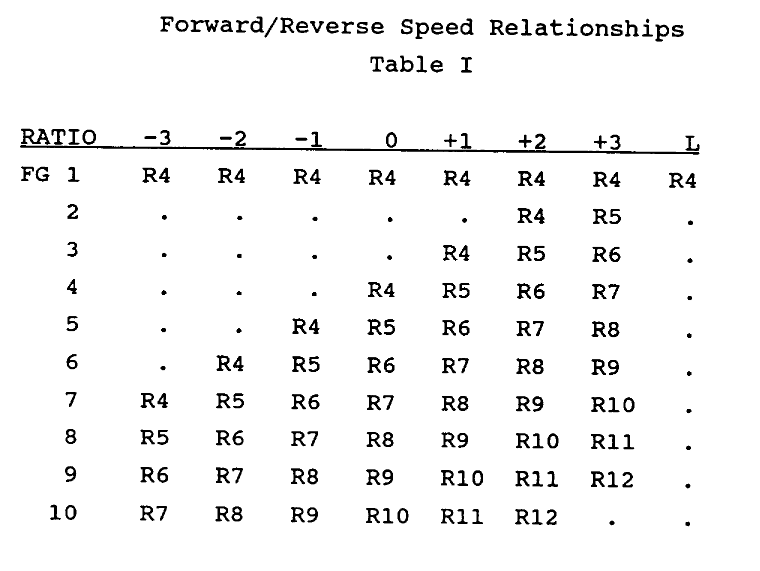

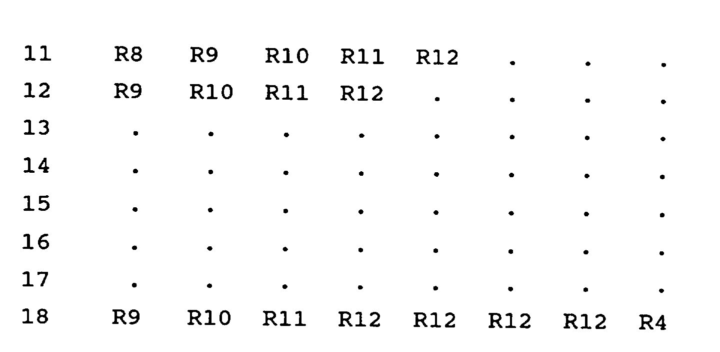

Table I shows the relationship of the reverse gear to a selected forward gear for each value of RATIO. As shown in Table I, RATIO has one of the values -3, -2, -1, 0, +1, +2, +3 or L. If RATIO has the value L, the lowest reverse gear will be selected regardless of the forward gear value. If RATIO has the value between -3 and +3, then RATIO is added to the selected forward gear to determine which reverse gear will be selected. However, if the sum of the forward gear value and RATIO is less than 4, then the lowest reverse gear R4 is selected, and if the sum is greater than 12 then the reverse gear is selected as shown in Table I.

Returning to Figure 12, after the display is updated at step 150 the program moves to step 152 where it waits since the operator is holding the gearshift lever 6 in the RUP position. This gives the operator an opportunity to observe the displayed value of RATIO and determine if it needs modification. The operator moves the gearshift lever 6 to the R position and the program advances to step 154 where it again waits for movement of the gearshift lever 6. When the operator moves the gearshift lever out of the R position, the program advances to an Adjust Ratio routine 156 illustrated in Figure 13.

Assume first that the operator, at step 154 moves the gearshift lever 6 to some position other than an UP or DN position. When the program enters the Adjust Ratio routine, the tests of the gearshift switches 4 at steps 160 and 160' prove false and the program moves back to step 160. Steps 160 and 160' are repeatedly executed until the ignition switch is turned off or the gearshift lever 6 is moved to an UP or DN position. It should be noted that the selection of a ratio value may be accomplished using any UP and DN gearshift lever positions. For the sake of simplicity, the flow diagram of Figure 13 is drawn for the case where the RUP and RDN positions are used. Assume now that the value of RATIO displayed at step 150 is lower than the value the operator wishes to select so that he moves the gearshift lever 6 to the RUP position to exit from step 156. In Figure 13, the RUP test at step 160 proves true and the program moves to step 162 where it tests the value of RATIO. If ratio is not at its maximum value, it is incremented and saved in a nonvolatile memory location at step 164 and the display updated at 166 before the program moves to step 168.

The routine waits at step 168 for a fraction of a second long enough for the operator to observe the displayed value of RATIO and move the gearshift lever 6 if he desires to do so. It then advances to step 170 to test the gearshift switches 4 to see if the gearshift lever 6 is in the R position. If the operator is still holding the gearshift lever 6 in the RUP position the routine advances to step 172 where the test for the RUP position proves true. The program loops back to step 162 to test RATIO, increment and save it if it is not at its maximum value, and display the incremented value. This continues until the operator moves the gearshift lever 6 to the R position. At step 170 the program continuously tests to see if the gearshift lever 6 is in the R position, and remains at step 170 as long as the test proves true. If the operator moves the gearshift lever 6 from the R position to the RDN position, the program moves from step 170 to step 172 where the test for RUP proves false. The program advances to step 160' and since the gearshift lever 6 is in the RDN position step 162' is executed where the value of RATIO is tested to see if it is at its lowest value. Assuming it is not, RATIO is decremented and saved at step 164' and the display updated at step 166'. The program waits for a fraction of a second at step 168' to permit the operator to observe the display, and then proceeds to step 170' where the gearshift switches 4 are tested to see if the gearshift lever 6 is in the R position.

If the operator has moved the gearshift lever 6 to the R position, the program waits at step 170' until he moves the gearshift lever 6 to another position. If he moves the gearshift lever 6 to the RDN position, the program advances to step 172', where the RDN test proves true, and loops back to step 162' to again update the display. On the other hand, if the operator moves the gearshift lever 6 from the R position to the RUP position the program moves from step 170' to step 172' and step 160. From step 160 the program tests RATIO and possibly updates it as previously described.

Thus, the operator may selectively move the gearshift lever 6 between the R, RDN and RUP positions, the value of RATIO being decremented while the gearshift lever 6 is in the RDN position and incremented when the gearshift lever 6 is in the RUP position. However, as explained above, the FDN, FUP, NUP and NDN positions may also be used for incrementing/decrementing RATIO. The flow diagram of Figure 13 may thus be generalized by providing UP tests at steps 160 and 172, DN tests at steps 160' and 172', and N, F or R tests at steps 170 and 170'.

If, during incrementing of RATIO, it reaches its maximum value (+3), the test at step 162 proves true and the program jumps from step 162 to step 170, thereby bypassing the incrementing step. In like manner, if RATIO reaches its minimum value (L=4) during decrementing the program jumps from step 162' to step 170' thereby bypassing the decrementing step.

After the operator has adjusted the value of RATIO to the desired value, he may terminate the adjustment by turning the ignition switch off. The operator must turn the ignition switch off and then on again, this time not holding the gearshift lever in the RUP position, in order to use the value of RATIO which he has programmed into the system.

After the ignition switch is turned off and then on again to the start position to start engine 7, the microprocessor 1 begins executing a program wherein it samples the gearshift switches 4 and energizes the clutches in transmission 10 as the operator moves the gearshift lever 6 to actuate the switches 4. Each time the gearshift lever 6 is moved to the R position, the microprocessor 1 executes the subroutine shown in Figure 14A. At step 180 the microprocessor 1 detects from the gearshift switches 4 that the gearshift lever 6 has been moved to the R position. At step 182 a current gear register CG is tested to see if it contains a value greater than (12). The CG register stores the value of the gear (forward) from which the transmission 10 is being shifted. If CG is equal to or greater than (12), a previous gear register PG is set to the value (12) at step 184. If CG has a value less than (12) then at step 186 the PG register is set equal to CG. At step 190, PG and RATIO are used to address a table location in memory and read the reverse gear value RG from memory. The value stored in the memory table correspond to the values in Table I, above, for the values of forward gear between (1) and (12). The value of RG is then used by the microprocessor 1 at step 192 to energize the clutches in transmission 10.

Although not part of the illustrated routine of Figure 14A, it should be noted that upon upshifting or downshifting in reverse, or if speed matching occurs as subsequently described, the previous gear register PG is cleared.

When the gearshift lever 6 is shifted from reverse to forward, the microprocessor 1 detects, at step 194 (Figure 14B), that the lever 6 is in the F position. At step 195, PG is tested to see if it has been cleared. If it has, a table is addressed at step 198 to read out the forward gear value FG and at step 199 the microprocessor 1 uses this value of FG to energize the transmission clutches.

On the other hand, if the test at step 195 shows that the PG register has not been cleared, then FG is set equal to PG.

From the foregoing description it is seen that the routine illustrated in Figures 12 and 13 enables the operator to preselect a forward-to-reverse gear relationship value if he holds the gearshift lever 6 in the RUP position as he turns the ignition on. Figures 14A and 14B illustrate how this value is used to modify whatever forward gear value the operator happens to select to thereby obtain a reverse gear value for controlling transmission 10. The selection of reverse gear is made according to Table I.

### Controlled Vehicle Deceleration During Shuttle Shifting

Shuttle shifting of the transmission 10 from forward to reverse gear, or from reverse to forward gear results in an energy load on the transmission oil, and loading of the vehicle engine with a consequent increase in fuel consumption. The energy load placed on the clutches increases at a rate proportional to the square of the vehicle speed so that when the vehicle speed reaches about 4 MPH (6,4 km/h) the clutches in the transmission are overloaded by shuttle shifting. Thus, larger and more expensive clutches become necessary for shuttle shifting even at moderate vehicle speeds. However, several methods have been developed for controlling transmission 10 to prevent clutch overloading and, for a given clutch sizing, permit shuttle shifting at moderate or high vehicle speeds without overloading the clutches.

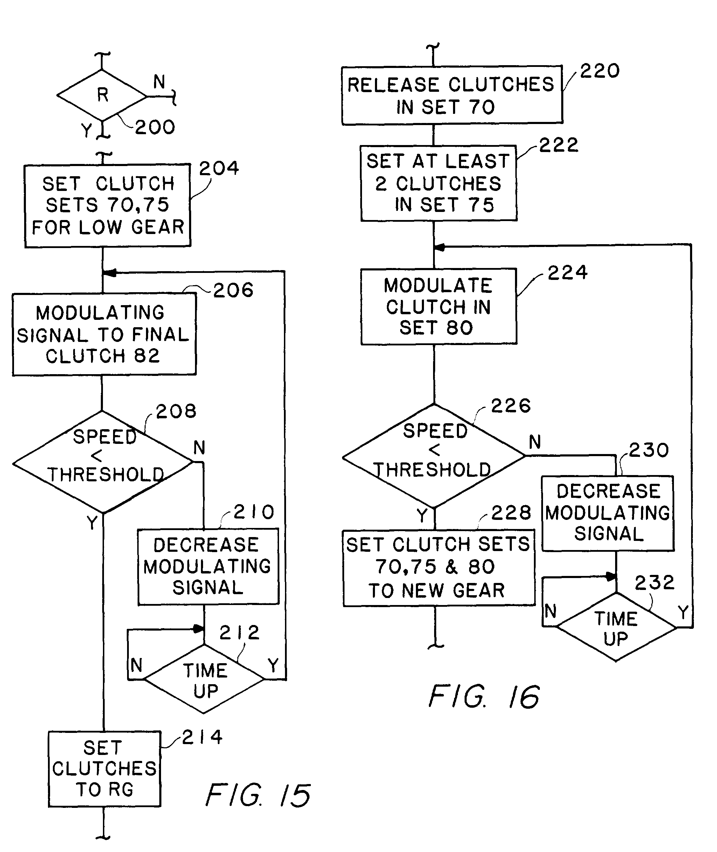

Figure 15 illustrates a first method which may be used at low and moderate vehicle speeds up to about 7 or 8 miles per hour (11 or 13 km/h). Assume that the vehicle has been in some forward gear and the operator moves the gearshift lever 6 (Figure 10) from the F to the R position. At step 200, the microprocessor 1 senses that the gearshift lever 6 is in the R position, the program proceeds to step 204 where the microprocessor 1 applies signals to the clutches in the initial and intermediate clutch sets 70 and 75 (Figure 3) to select the lowest gear speed. At step 206 a modulating signal is applied to the low speed clutch 82 or the reverse clutch 83 in the final clutch set 80. The output shaft 20 is rotating, being driven at this time because of forward vehicle movement. Application of the modulating signal to a clutch in the final clutch set 80 causes the output shaft 20 to begin driving the transmission 10 and this load begins slowing the output shaft 20. The modulating signal is a pulse width modulated current signal that is applied to the solenoid which controls the valve that in turn controls the pressure applied to the torque transmitting element of the clutch.

At step 208, the speed of the output shaft 20 is sensed by sensor 5 (Figure 1) and the microprocessor 1 compares this speed with some threshold value near zero. If the speed is greater than the threshold value, the microprocessor 1 decreases the modulating signal at step 210 and waits for a short interval of time at step 212 before looping back to again execute steps 206 and 208. The decreased modulating signal causes a higher hydraulic pressure to be applied to the torque transmitting element of clutch 82 or 83.

When the speed of shaft 20 has been reduced so that the sensed speed is less than the threshold value, this condition is detected at step 208 and the program moves to step 214 where the microprocessor 1 applies signals to the clutch sets 70, 75 and 80 to select the desired reverse gear speed.

When shifting takes place from reverse to forward gear, the microprocessor 1 executes a sequence of steps like steps 204-214 with the exception that the forward gear clutches are set to select the desired forward gear at step 214.

The method just described permits shuttle shifting of transmissions at low and moderate speeds even without torque converters. However, this method is not satisfactory for use when shuttle shifting at higher speeds. An incremental increase in efficiency in such operation can be gained in the following manner. It has been found that, with proper clutch control, clutch energy loads can be reduced thus allowing shuttle shifting to take place at higher speeds while resulting in lower oil temperatures and lower clutch energy loads. Furthermore, by sharing the energy load between two or more clutches, shifting may be accomplished at even higher speeds. Also, there is a reduced engine load and a greater economy of fuel use. To gain all of these advantages, the transmission 10 illustrated in Figure 3 may be controlled as illustrated in the flow diagram of Figure 16 when the gearshift lever 6 is moved into either the reverse position R or the forward position F to select a new desired gear speed.

At step 220, all of the clutches 71, 72 and 73 in the initial clutch set 70 are released thereby disconnecting the engine 7 from the transmission. Gearing within the transmission 10 continues to rotate. Next, two or more of the clutches 76, 77 and 78 in the intermediate clutch set 75 are energized at step 222 thereby locking up the transmission 10 and stopping rotation of the internal transmission parts. After the transmission 10 has been locked up, one of the clutches 81, 82 and 83 in the final clutch set 80 is modulated at step 224 to connect the transmission gearing to the output shaft 20 thereby decelerating the vehicle. The output speed is monitored by the output shaft speed sensor 5 (Figure 1). When the vehicle is nearly stopped, the microprocessor 1 outputs signals to the clutches in the transmission 10 to actuate the appropriate clutches to select a desired new gear speed. At step 226 the microprocessor 1 senses the speed and if the speed exceeds a threshold value, the microprocessor 1 computes a new modulating signal value at step 230 and waits a short interval at step 232. The new modulating signal is then applied to the solenoid of the clutch in set 80 when the program loops back to step 224. As described above with respect to step 208, the transmission 10 may then shift to the selected gear.

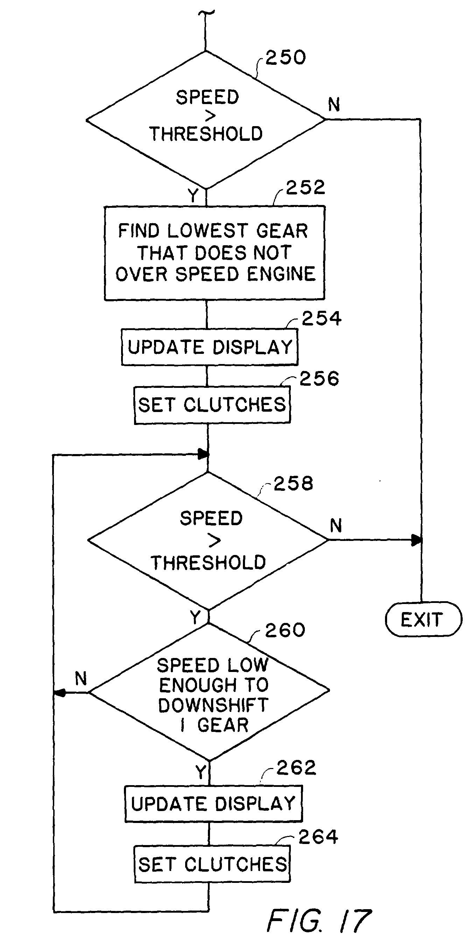

Figure 17 illustrates a further method for controlling vehicle deceleration when shuttle shifting. The method illustrated in Figure 17 is particularly suited for shuttle shifting at high vehicle speeds. It allows shuttle shifting at maximum vehicle speed without free wheeling and without excessive clutch loads. The initiation of shifts is based on vehicle speed hence the method automatically adapts to variations in vehicle deceleration due to surface conditions, grades, drawbar loads and operator use of service brakes.

The microprocessor 1 enters the routine of Figure 17 when the gearshift lever 6 is in the forward gear position F and the forward speed of the vehicle is above about 7.5 MPH (12 km/h). Actually, the forward speed of the vehicle is determined by the speed sensor 5 which senses the rate of rotation of the transmission output shaft 20. The shaft carries a 72-tooth gear whose rotation is magnetically sensed by the sensor 5 which produces one output pulse for each tooth sensed on the rotating gear. Table II shows, for an exemplary embodiment, the correlation between each forward gear and the frequency of the output signal from the speed sensor 5.

**Table II**

| DO NOT DOWNSHIFT FROM | IF FREQUENCY OF OUTPUT FROM SENSOR EXCEEDS |
|---|---|
| FG=18 | 2802 |
| 17 | 2392 |
| 16 | 2043 |
| 15 | 1724 |
| 14 | 1472 |
| 13 | 1257 |
| 12 | 1067 |
| 11 | 911 |
| 10 | 778 |
| 9 | 662 |
| 8 | 565 |
| 7 | 483 |
| 6 | 408 |
| 5 | 408 |
| 4 | 408 |
| 3 | 408 |
| 2 | 408 |

The routine of Figure 17 starts at step 250 where the vehicle speed, or more particularly the output frequency of the sensor 5 is compared with a threshold frequency value. If the sensor output frequency is lower than the threshold value it means that another deceleration strategy should be used. Thus, from step 250 an exit is made from the routine to one of the routines described above for controlling vehicle deceleration.

If the test at step 250 shows that the vehicle speed is high enough to invoke the high speed deceleration routine, the program moves to step 252. At this step, the microprocessor 1 successively accesses its memory which stores the values shown in column 2 of Table II, and compares each accessed value with the frequency of the output signal from sensor 5 until it finds the lowest gear that will not overspeed the engine. That is, it finds the highest frequency value in the table which is still less than the frequency of the output signal from the sensor 5. For example, if the output from sensor 5 is a 1400 HZ signal, the value 1257 is the highest frequency in the table which is still less than 1400. This corresponds to gear (13). The microprocessor 1 reads this value from the table and sends it to the display at step 254. At step 256 the value (13) is used to energize the clutches in transmission 10 to select forward gear (13). Since forward gear (13) would normally drive the shaft 20 at only 1257 HZ or 1257X60/72 RPM but the actual rotation of the shaft 20 is greater, the engine 7 becomes a load which slows down the vehicle.

After the transmission 10 is shifted into gear (13) at step 256, the program enters a loop comprising steps 258 and 260. At step 258 the frequency of the output signal from sensor 5 is compared with the threshold frequency to see if the speed is such that the downshift strategy is still required. If it is not, the routine exits to another deceleration routine as described above that is suitable for use at lower speeds.

If the test at step 258 shows that the speed is still greater than the threshold value the program executes step 260. At this step the microprocessor 1 tests the vehicle speed as measured by the output from sensor 5 and determines if the transmission 10 can be downshifted one gear. This is done by accessing the table for gear (13) to read out frequency value 1257, and then comparing 1257 with the output frequency as measured by sensor 5. If sensor 5 is still producing an output signal greater than 1257 HZ, the program loops back to again execute steps 258 and 260. At some point the vehicle will be decelerated so that the output signal from sensor 5 is less than 1257 HZ. When this is determined at an execution of step 260, the display is updated at step 262 to display gear 12 and at step 264 clutches are energized to select gear 12 so that the engine 7 again becomes a load on the output shaft 20.

Steps 258 and 260 are again repeatedly executed and, if the test at step 260 shows the speed as measured by sensor 5 to be less than the value accessed from the table, steps 262 and 264 are executed to update the display and downshift the transmission 10 one gear. This continues until a test at step 258 shows that the speed of the vehicle is low enough to employ a low or medium speed deceleration routine as described above. At this point an exit is made from the routine of Figure 17 to the new deceleration routine.

### Clutch Calibration

As explained above, solenoid operated valves control the hydraulic pressure applied to the clutches and thus the torque transferred by the clutches to move the vehicle. Variations in the current applied to the solenoids, the valve adjustments, and the pressure required to begin to transfer torque all result in inconsistent operation from one tractor to the next, and variations in the operation of a given tractor over a period of time.

According to one aspect of the present invention, a calibration program is stored in microprocessor 1 for calibrating the clutches 81, 82 and 83 in the final clutch set 80 of transmission 10. This program may be used on each new tractor after assembly, or as required by service or clutch wear, to determine the magnitude of a current which must be applied to a solenoid so that the clutch controlled by the solenoid produces a torque just sufficient to reduce engine speed. A value representing this magnitude of current is stored in the microprocessor 1 or memory during the calibration program. Subsequently, when the solenoid is to be energized the value is read from the memory to control the magnitude of the current applied to the solenoid.

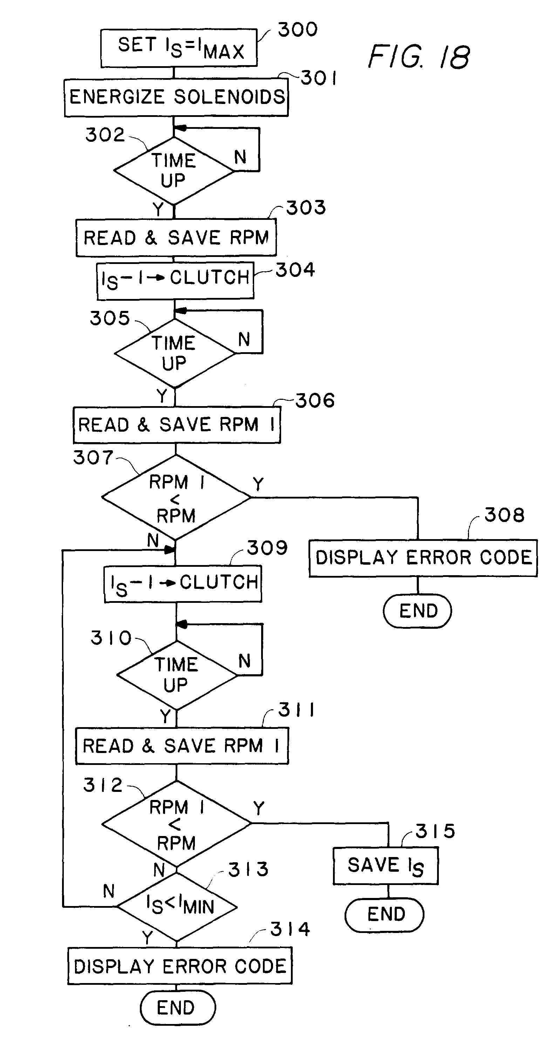

Figure 18 is a flow diagram illustrating one method of clutch calibration. During this method of calibration, the vehicle brakes should be applied so that the output shaft 20 (Figure 3) of the transmission 10 does not rotate. This assures uniform loading conditions during the calibration procedure. The microprocessor 1 starts the routine at step 300 by setting Iₛ=I_{Max}, where I_{Max} is the maximum current which may be applied to the solenoid of the clutch being calibrated. At step 301, a current corresponding the value of Iₛ is applied to the solenoid of the clutch being calibrated. It should be remembered that the hydraulic pressure applied to one of the clutches in transmission 10 varies inversely with respect to the current Iₛ applied to the clutch solenoid. Therefor, when Iₛ=I_{Max} is applied to the clutch at step 301, the lowest hydraulic pressure is applied to the clutch. This pressure should be low enough such that the clutch is not applied.

At step 302 the routine waits for an interval of time sufficient for the engine speed to stabilize after any loading caused by energization of the clutches. After this interval of time has elapsed, the calibration routine advances to step 303 where the microprocessor 1 determines the engine speed RPM as sensed by the sensor 9 (Figure 1). This reference value of engine speed is saved and the program advances to step 304 where Iₛ is decremented and applied to the clutch being calibrated to thereby increase the pressure to the clutch.

At step 305, the program again waits for a sufficient interval of time for the engine speed to stabilize after any loading caused by application of the decremented value of Iₛ to the clutch solenoid at step 304. At step 306 the engine speed is again sensed and at step 307 the new engine speed RPM1 is compared with the reference engine speed RPM. If RPM1 is less than RPM, it means that a reliable calibration of the clutch cannot be obtained and servicing of the clutch and/or its controls is required. The program branches to step 308 where the microprocessor 1 sends signals to the display 2 to display an error code indicating a high I_{S} error. After the display is energized the calibration routine ends.

If the comparison at step 307 shows that RPMl is not less than RPM then at step 309 I_{S} is again decremented and applied to the solenoid of the clutch being calibrated. The program waits at step 310 for the engine speed to stabilize in case the new value of I_{S} applied to the solenoid resulted in a loading of the engine as a result of torque being transmitted by the clutch. The engine speed is again sensed at step 311 and compared at step 312 with the value RPM saved at step 303.

If the comparison at step 312 shows that RPMl is not less than RPM, the program moves to step 313 where the value of I_{S} generated at step 309 is compared with a minimum permissible value I_{MIN}. If I_{S} is not less than I_{MIN} the program loops back to step 309.

The loop comprising steps 309-313 is repeatedly executed until the comparison at step 312 shows RPM to be greater than RPM1, or the test at step 313 shows that I_{S} is less than I_{MIN}. If RPM is greater than RPMl, it means that the engine has slowed as a result of being loaded, and this in turn indicates that the clutch being calibrated has transmitted torque in response to the signal I_{S} generated the last time step 309 was executed. This value of I_{S} is saved at step 315. Subsequently, each time the clutch is to be energized, the microprocessor 1 subtracts the saved value of I_{S} from a fixed current value and the difference current is applied to the clutch as a modulating signal.

If, during execution of the loop comprising steps 309-313, the test at step 313 proves true, it means that the clutch cannot be calibrated without servicing. The microprocessor 1 sends signals to display 2 to display a low current error message on the display at step 314.

It will be understood that Figure 18 illustrates the routine for calibrating a single one of the clutches 81, 82 or 83. The routine must be executed for each clutch to be calibrated so that a calibration value of Iₛ is saved for each clutch.

For ease of description, steps 307 and 312 show a comparison of RPM and RPMl. However, as is conventional in measurement systems, a small offset value may be added to RPM before it is compared with RPMl. Also, steps 304 and 309 show Iₛ being decremented by 1. It should be understood that "1" represents an increment of current necessary to change the pressure applied by the clutch torque transmitting element some fixed increment such as 10psi (68,9 kPa).

In the calibration method illustrated in Figure 18, the vehicle brakes are applied during the calibration procedure to prevent vehicle movement, and the engine speed is sensed to determine when a load is placed on the engine as a result of the clutch transmitting a torque. However, it is possible to calibrate the clutches by not applying the vehicle brakes during the calibration procedure, and sensing when the vehicle begins to move. Vehicle movement may be sensed by sensor 5 (Figure 1) which senses rotation of the transmission output shaft 20.

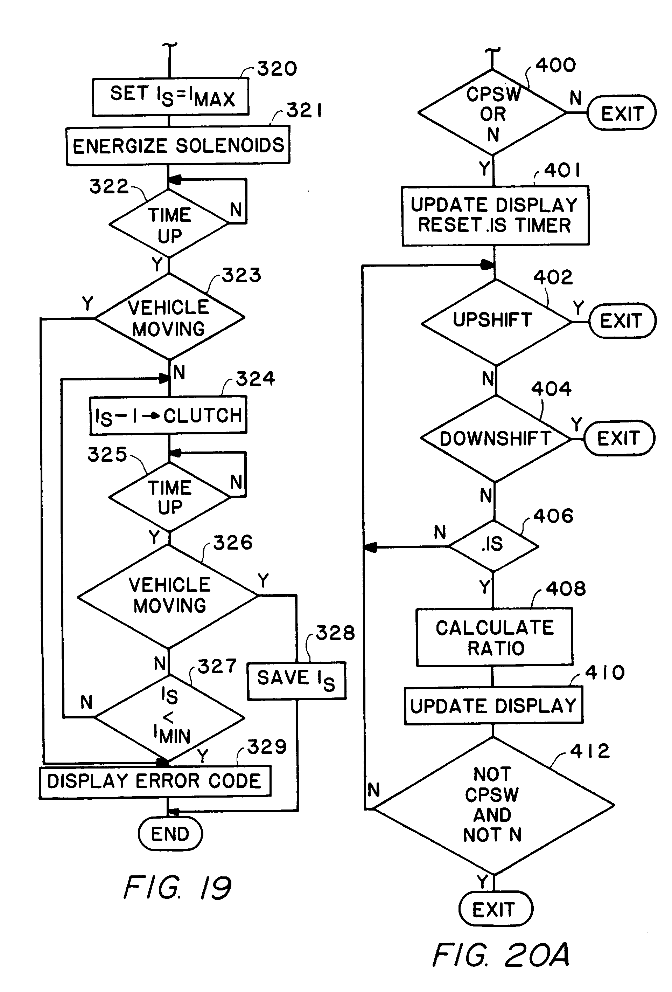

Figure 19 illustrates the method of calibrating a clutch by sensing when the clutch transmits sufficient torque to move the vehicle. At step 320 Iₛ is set equal to I_{MAX} so that maximum current is applied to the solenoid of the clutch being calibrated resulting in minimum hydraulic pressure being applied to the torque transmitting element of the clutch. Clutch solenoids are then energized at step 321 so that drive power from the engine may be transmitted to the transmission output shaft 20. This may be any combination of clutch solenoids necessary to select a particular gear, so long as the combination includes the solenoid of the clutch being calibrated. At step 322 the program waits for any torque transmitted by the clutches to be manifested by movement of the vehicle, or more specifically, rotation of the transmission output shaft 20. At step 323 the microprocessor 1 acts with sensor 5 to sense rotation of the shaft 20. If it is rotating at this time it means that it is impossible to calibrate the clutch so the program branches to step 329 where the microprocessor sends signals to the display 2 to cause it to display an out of range error code.

If the test at step 323 shows that output shaft 20 is not rotating, the program decrements Iₛ at step 324 and applies this decremented value of Iₛ to the solenoid of the clutch being calibrated. This causes an increase in the hydraulic pressure applied to the torque transmitting element of the clutch. At step 325 the program waits for this increased pressure to take effect and at step 326 the output shaft rotation is again sensed.

Assuming that shaft 20 is still not rotating, the program advances to step 327 to compare the value of Iₛ produced at step 324 with a minimum permissible solenoid current I_{MIN}. If Iₛ is not less than I_{MIN} the program loops back to step 324. The loop comprising steps 324-327 is repeatedly executed and Iₛ is decremented on each execution until one of the tests at step 326 or 327 proves true.

When the test at step 326 indicates that shaft 20 is rotating, the last value of Iₛ produced at step 324 is saved in memory at step 328 and the program ends. This value of Iₛ may subsequently be used to control the magnitude of the current applied to the clutch.

If the program should execute the loop comprising steps 324-327 so many times that Iₛ is decremented to a value less than I_{MIN} the clutch cannot be calibrated. Step 327 detects that Iₛ is less than I_{MIN} and the program moves to step 329 where an out of range error code is sent to display 2 before the program ends.

### Manual Override of Automatic Ratio Matching

The prior art transmission control system shown in Figure 1 employs an automatic ratio matching feature to reduce clutch slippage when shifting gears, or to prevent start-up in a high gear which could overload the clutches. In addition, the automatic ratio matching feature permits direct shifting from one gear to another without shifting through all of the intermediate gears.

In Figure 1 the microprocessor 1 invokes a ratio matching routine when the gearshift lever 6 is moved to the neutral position or when the clutch pedal 3 is depressed. The microprocessor 1 computes a speed ratio based on the rates of rotation of input shaft 15 and output shaft 20 as sensed by the sensors 9 and 5, respectively, and energizes the display 2 to indicate the optimum gear for the computed ratio. The computation is repeated and the display updated as long as pedal 3 is depressed or the gearshift lever 6 is in the neutral position. When the pedal 3 is released and the gearshift lever 6 is moved to the forward or the reverse position, the microprocessor 1 sends signals to the clutches 8 to select the gear corresponding to the gear displayed on the display 2.

While the automatic ratio matching feature is admirably suited for its intended purpose, it does remove some control of the transmission 10 from the operator. Figure 20A is a flow diagram illustrating a method for manually overriding the automatic ratio matching feature of the system of Figure 1. The microprocessor 1 invokes the routine of Figure 20A when it senses, at step 400, that the clutch pedal 3 has been depressed to actuate the clutch pedal switch CPSW, or the gearshift lever 6 is in the neutral position N. At step 401, the microprocessor 1 updates the display 2 and sets a timer. At steps 402 and 404, the microprocessor 1 determines from the gearshift switches 4 whether the gearshift lever 6 is in one of the upshift or downshift positions. Assume for the moment that it is not. The program checks the timer at step 406 to see if .1 second has elapsed since the timer was set at step 401. The program loops back and repeats steps 402, 404 and 406 until the .1 second interval expires. This gives the operator time to operate the gearshift lever 6 if he wishes.

When the .1 second interval expires, the program advances to step 408 to calculate the ratio between the rate of rotation of output shaft 20 and input shaft 15. This ratio defines the gear which will be selected when the gearshift lever 6 is moved out of the neutral position or the clutch pedal 3 is released. At step 410 the display 2 is updated to display the gear value.

At step 412, the microprocessor 1 tests the gearshift switches 4 and the clutch pedal switch CPSW. If the clutch pedal 3 is still depressed and the gearshift lever is still in the neutral position, the program loops back to step 402 to repeat the operations just described.

Should the operator release the clutch pedal 3 and shift the gearshift lever 6 out of neutral, automatic ratio matching is effective. At step 412 an exit is made from the routine to set the clutches to the gear corresponding to the gear last displayed at step 410.

In accordance with the invention, the steps 402 and 404 are provided to permit the operator to override the automatic ratio matching operation. The override may take place any time after the routine is entered but before the clutch pedal 3 is released and the gearshift lever 6 is moved out of neutral. The override is effected when the operator moves the gearshift lever 6 to an upshift or a downshift position. If the gearshift lever 6 is moved to an upshift position an exit is made from the routine at step 402 to an upshift routine and if it is moved to a downshift position an exit is made from the routine at step 404 to a downshift routine.

The manual override method illustrated in Figure 20A is permanent in that automatic ratio matching will not occur again until the next time the gearshift lever 6 is shifted to the neutral position or the clutch pedal 3 is depressed.

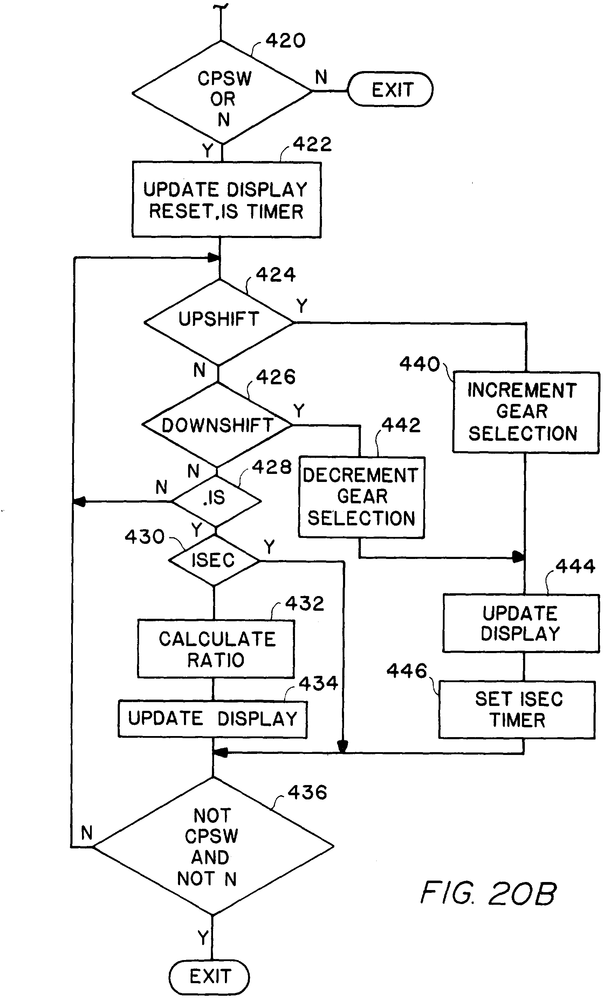

Figure 20B illustrates a manual override method which is temporary in that the automatic ratio matching starts again if the gearshift lever 6 remains in neutral or the clutch pedal 3 remains depressed for a specific interval of time.

The routine of Figure 20B is entered at step 420 when the microprocessor 1 senses that the operator has depressed the clutch pedal 3 or shifted the gearshift lever 6 into neutral. At step 422 the display is updated and a .1 second timer is reset. Tests are then made at steps 424 and 426 to see if the gearshift lever 6 has been shifted to an upshift or a downshift position. Assuming for a moment that the gearshift lever 6 has not been moved to an upshift or a downshift position, the program advances to step 428 and tests the .1 second timer to see if it has timed out. If it has not, the program branches back to step 424 to repeat the loop comprising steps 424, 426 and 428 until the .1 second interval has elapsed.

At the end of the .1 second interval the microprocessor 1 tests a 1 second timer at step 430 to see if it is running. This timer is set as subsequently explained and for the moment assume that it is not running. The program proceeds to step 432 to calculate a ratio as explained previously with respect to step 408 of Figure 20A. At step 434 the calculated ratio value is used to update the display, thereby indicating to the operator the gear which will be selected when he moves the gearshift lever 6 out of neutral or releases the clutch pedal 3.

At step 436 the clutch pedal switch CPSW and gearshift lever switches 4 are tested and, if the operator has not released the clutch pedal 3 or has not shifted out of neutral, the program branches back to step 424 to repeat the sequence of operations just described. If the operator should move the gearshift lever 6 out of neutral and release the clutch pedal 3, the program exits the routine at step 436 and proceeds to complete the automatic ratio matching by setting the clutches in the transmission to select the gear corresponding to the gear value last displayed at step 434.

Assume now that while the microprocessor 1 is still executing the loop extending from step 424 to step 436, the operator moves the gearshift lever 6 to the upshift or downshift position. If he moves it to the upshift position the program branches to step 440 to increment the gear selection value being displayed on the display 2, and if he moves it to the downshift position the program branches to step 442 to decrement the displayed gear selection value. After step 440 or 442 is executed, the microprocessor 1 updates the display at step 444 and sets a timer at step 446.

The timer set at step 446 is the timer which is tested at step 430. When the timer is set, it runs for one second. During this one second interval the test at step 430 will prove true and the microprocessor 1 will skip steps 432 and 434 thus bypassing the calculation and display of the automatic ratio matching gear.

After step 446 is executed, the program proceeds to step 436 to see if the clutch pedal 3 is released and the gearshift lever 6 has been shifted out of neutral. If it has, then the program exits the routine at step 436 and proceeds to select the gear corresponding to the gear value displayed at step 444.

To summarize the operations in Figure 20B, if the routine is entered and, during execution of the routine, the gearshift lever 6 is not shifted to one of the upshift or downshift positions, normal automatic ratio matching occurs when the test at step 436 shows that the gearshift lever 6 is not in neutral and the clutch pedal 3 is released.

On the other hand, if the operator moves the gearshift lever 6 to a downshift or upshift position he may increment or decrement the displayed gear value. He may increment or decrement by more than one by holding the gearshift lever 6 in the upshift or downshift position. He may even increment or decrement the displayed gear value, shift the gearshift lever 6 to neutral, and then shift it back to one of the upshift or downshift positions so long as he does not leave the gearshift lever 6 in neutral long enough for the one-second timer to time out. If he should permit the timer to time out, steps 432 and 434 would no longer be bypassed and the automatic ratio matching would again be in effect. Even at this point he may again override the automatic ratio matching feature by again moving the gearshift lever 6 to the upshift or downshift position. When step 436 detects that the gearshift lever 6 is not in neutral and the clutch pedal 3 is not depressed, the transmission is shifted into the gear whose value was last displayed at step 434 or 444. The value displayed at step 434 is used if the gearshift lever 6 has not been moved to the upshift or downshift position while the routine was being executed, or if more than one second has elapsed since the gearshift lever 6 was last in the upshift or downshift position. The value displayed at step 444 is used only if the clutch pedal 3 is released and the gearshift lever 6 is shifted out of neutral within one second of the time the value is first displayed.

## Claims

1. A method of controlling the operation of a powershift transmission (10) having an input shaft (15), an output shaft (20), a plurality of gears (18, 31-33, 35-37, 41-43, 46-49, 51, 57, 61-63) in driving relationship with the input and output shafts (15, 20) and a plurality of clutches (8/71-73, 76-78, 81-83) operatively associated with the input and output shafts (15, 20) and with said gears and being selectively engageable to drivingly couple the input shaft (15) to the output shaft (20) and to effect a varying of the speed of operation of the output shaft (20) for a given speed of operation of the input shaft (15); said transmission (10) further also having an electronic controller including a microprocessor (1) operably associated with the transmission (10) for effecting gear changes within this transmission (10) and a control mechanism operably connected to the microprocessor (1) to signal desired gear changes thereto; said control mechanism comprising a gearshift means (6) movable along a first path of travel between a plurality of positions, including forward, reverse and neutral positions (F, R, N) and said gearshift means (6), when in the forward or reverse positions (F, R) further also being movable along a second path of travel between an upshift sub-position (FUP, RUP) corresponding to a desired upshift gear change and a downshift sub-position (FDN, RDN) corresponding to a desired downshift gear change, and
said method being characterized in that it comprises the steps of :
- preselecting a desired gear by moving the gearshift means (6) between an upshift sub-position (NUP) and a downshift sub-position (NDN) when in said neutral position (N) to generate signals (126, 126') representing a desired gear,
- storing said signals (126, 126'), and
- selecting said desired gear by subsequently utilizing the stored signals (126, 126') representing the desired gear to selectively energize the clutches (8) when the gearshift means (6) is moved to the forward position (F), respectively the reverse position (R).

2. A method according to claim 1 characterized in that the preselecting step further includes the step of selectively actuating switches (4) for generating said signals (126, 126').

3. A method according to claim 1 or 2 characterized in that said signals (126, 126') represent a desired forward gear.

4. A method according to claim 3 characterized in that the storing step further includes the step of utilizing said stored signals (126, 126') to generate second signals for energizing the clutches (8) when said gearshift means (6) is moved to the reverse position (R) in a manner such that said second signals energize said clutches (8) to select the lowest possible reverse gear when said desired gear is less than the lowest possible reverse gear or to select the highest possible reverse gear when said desired gear is greater than the highest possible reverse gear.

5. A method according to any of the preceding claims characterized in that it also comprises the steps of :
- holding the gearshift means (6) in a predetermined one (RUP) of said positions while turning on the ignition switch to enable the microprocessor (1) to enter a forward-to-reverse speed ratio selection routine (Figure 12);
- selectively moving said gearshift means (6) while the microprocessor (1) is in said routine to generate a ratio value (RATIO) and store said value (RATIO) in a non-volatile memory (164, 164'/Figure 13);
- subsequently using said ratio value (RATIO) and a forward gear value (FG) selected by movement of the gearshift means (6) to thereby obtain a reverse gear value (RG) bearing a predetermined relationship to said forward gear value (FG) (190, Table I); and
- generating from said reverse gear value (RG) signals which are applied to the clutches (8) to select the reverse gear speed of the transmission (10) (192).

6. A method according to claim 5 characterized in that it also comprises the steps of :
- using said ratio value (RATIO) and a reverse gear value (RG) selected by movement of the gearshift means (6) to thereby obtain a forward gear value (FG) bearing a predetermined relationship to said reverse gear value (RG) (198/Table 1); and
- generating from said forward gear value (FG) signals which are applied to the clutches (8) to select the forward gear speed of the transmission (10) (199).

7. A method according to claim 5 characterized in that, if the reverse gear value (RG) is less than the lowest reverse gear in the transmission (10), signals are applied to the clutches (8) to select the lowest reverse gear (R4).

8. A method according to claim 5 characterized in that, if the reverse gear value (RG) is greater than the highest reverse gear in the transmission (10), signals are applied to the clutches (8) to select the highest reverse gear (R12).

9. A method according to any of the preceding claims characterized in that it also comprises the step of engaging a ratio matching routine (Figures 20A, 20B) in the microprocessor (1) to select a gear having a gear ratio substantially equivalent to the ratio derived from the respective speeds of rotation of the input and output shafts (15, 20).

10. A method according to claim 9 characterized in that said engaging step comprises the steps of :
- disengaging the transmission (10) so that rotational power is not being transferred from the input shaft (15) to the output shaft (20);
- calculating a ratio (408, 432) of the rotational speed of the output shaft (20) divided by the rotational speed of the input shaft (15) thereby determining said selected gear within the transmission (10) having a gear ratio substantially equivalent to the calculated ratio;
- generating and storing signals (410, 434) representative of said selected gear; and
- subsequently utilizing the stored signals to selectively energize the clutches (8) when the transmission (10) is re-engaged to shift to the selected gear.

11. A method according to claim 9 or 10 characterized in that it also comprises the steps of :
- signalling the microprocessor (1) for an upshift (402) or a downshift (404) of the transmission (10) while engaged in said ratio matching routine (Figure 20A); and
- exiting said ratio matching routine (Figure 20A) and entering a gear selection routine (Figure 11) in the microprocessor (1) while the gearshift means (6) remains in the neutral position (N) to effect a selection of an alternative gear other than said gear selected by the ratio matching routine (Figure 20A).

12. A method according to claims 9 or 10 characterized in that it also comprises the steps of :
- signalling the microprocessor (1) for an upshift (424) or a downshift (426) of the transmission (10) while engaged in said ratio matching routine (Figure 20B);
- activating a timer (446) to run for a first predetermined interval of time;
- exiting said ratio matching routine (Figure 20B) and entering a gear selection routine (Figure 11) in the microprocessor (1) to effect a selection of an alternative gear other than said gear selected by the ratio matching routine (Figure 20B); said entering step occurring only if the exiting step occurs before the expiration of said first predetermined interval of time; and
- remaining in the ratio matching routine (Figure 20B) if the first predetermined interval of time expires prior to the occurrence of the exiting step.

13. A method according to claim 11 or 12 characterized in that the gearshift means (6) is positionable in gear change sub-positions while in the neutral position (N); said signalling step including selectively moving the gearshift means (6) into a gear change position to signal the microprocessor (1) for effecting the selection of said alternative gear.

14. A method according to claim 13 characterized in that said gear change sub-positions include a neutral up position (NUP) and a neutral down (NDN) position.

15. A method according to claim 13 or 14 characterized in that the gearshift means (6) is also positionable in gear change sub-positions (FUP, FDN; RUP, RDN) while in the forward or reverse positions (F, R).

16. A method according to any of the claims 11 to 15 characterized in that the ratio matching routine (Figure 20A) is not re-engaged until the gearshift means (6) is returned to the neutral position (N).

17. A method according to any of the claims 11 of 16 characterized in that movement of the gearshift means (6) from the neutral position (N) to either one of the forward and reverse positions (F, R) effects a manipulation of the clutches (8) to engage said alternative gear.

18. A method according to any of the claims 11 to 17 characterized in that the transmission (10) is operably associated with a clutch pedal (3) operable to effect disengagement of at least one of the clutches (8) when moved into a disengagement position; said microprocessor (1) entering the ratio matching routine (Figure 20A) when the clutch pedal (3) is in said disengagement position.

19. A method according to claim 18 characterized in that movement of the clutch pedal (3) from the disengagement position effects a manipulation of the clutches (8) to engage said alternative gear.

20. A method according to claim 18 or 19 characterized in that the exiting step is effected after the gearshift means (6) is moved to any gear change sub-position.

21. A method according to claim 20 when appended directly or indirectly to claim 11 characterized in that the exiting step occurs when the clutch pedal (3) is returned to an engagement position while the gearshift means (6) is in the forward (F) or reverse (R) position and before the expiration of said first predetermined interval of time.

22. A method according to any of the claims 1 to 8 characterized in that it also comprises the steps of :
- disengaging the transmission (10) so that rotational power is not being transferred from the input shaft (15) to the output shaft (20);
- displaying the previously utilized gear (422);
- if a change of the displayed gear is desired, selecting a gear by selectively moving the gearshift means (6) to signal the microprocessor (1) of a selection of a desired gear (424, 440; 426, 442);
- after said selecting step (424, 440; 426, 442), activating a timer to run for a first determined period of time (446);
- after said selecting step (424, 440; 426, 442), displaying said desired gear (444);
- if said selecting step is not desired or if said first interval of time expires while the transmission (10) remains disengaged, calculating a ratio of the rotational speed of the output shaft (20) divided by the rotational speed of the input shaft (15) and designating a chosen gear within the transmission (10) having a gear ratio substantially equivalent to the calculated ratio (432);
- after the calculating and designating steps (432), displaying the chosen gear; and
- re-engaging the transmission (10) to shift to the displayed gear.

23. A method according to claim 22 characterized in that the disengaging step can be effected by moving the gearshift means (6) to the neutral position (N).

24. A method according to claim 22 or 23 characterized in that the re-engaging step is effected by a shifting of the gearshift means (6) to the forward or reverse positions (F, R).

25. A method according to any of the claims 22 to 24 characterized in that the transmission (10) is operatively associated with a clutch pedal (3) operable to effect said disengaging step by disengaging at least one of the clutches (8) in the transmission (10) upon movement of this clutch pedal (3) to a disengagement position.

26. A method according to any of the claims 22 to 25 characterized in that it further also comprises, after the disengaging step, starting a second timer (406, 428) to run for a second predetermined interval of time prior to the calculating step (432); said calculating and designating steps (432) occurring only after expiration of said second predetermined interval of time.

27. A method according to any of the claims 22 to 26 characterized in that the steps between the step of displaying the previously utilized gear (422) and the re-engaging step can be repeated prior to the occurrence of said re-engaging step.

28. A method according to any of the preceding claims characterized in that it also comprises steps for controlling deceleration of the output shaft (20) during downshifting of the transmission (10) into a desired gear, respectively shifting this transmission (10) from forward to reverse (F, R) and vice versa into a desired gear; said deceleration controlling steps including :
- first, selectively energizing the clutches (8) to select a low gear (204); and
- next and prior to selectively energizing the clutches (8) to establish the desired gear, modulating at least one of the clutches (8) to thereby decelerate the rotational speed of the output shaft (20)(206).

29. A method according to claim 28 characterized in that :
- it also comprises the step of monitoring the rotational speed of the output shaft (20)(208); and
- selecting the desired gear is effected only when the rotational speed of the output shaft (20) has reached a predetermined value (214).

30. A method according to any of the claims 1 to 27 characterized in that it also comprises steps for controlling deceleration of the output shaft (20) during downshifting of the transmission (10) into a desired gear, respectively shifting this transmission (10) from forward to reverse (F, R) and vice versa into a desired gear; said deceleration controlling steps including :
- disconnecting the transmission (10) from the input shaft (15)(220);
- locking the transmission (10) to prevent rotation of the gears therein; and
- subsequently and prior to selectively energizing the clutches (8) to establish the desired gear, modulating at least one of the clutches (8) to decelerate the rotational speed of the output shaft (20) to a predetermined value (224).

31. A method according to claim 30 characterized in that :
- the clutches (8) include an initial clutch set (70) having a plurality of clutches (71, 72, 73) for selectively connecting the input shaft (15) in driving relationship with a first plurality of shafts (21, 22, 23) and a final clutch set (80) having a plurality of clutches (81, 82, 83) for selectively connecting a second plurality of shafts (26, 28) in driving relationship with the output shaft (20); and
- the disconnecting step (220) includes releasing all clutches (71, 72, 73) in the initial clutch set (70) to disconnect the input shaft (15) from said first plurality of shafts (21, 22, 23).

32. A method according to claim 31 characterized in that :
- the clutches (8) further also include an intermediate clutch set (75) having a plurality of clutches (76, 77, 78) for selectively connecting the first plurality of shafts (21, 22, 23) in driving relationship with the second plurality of shafts (26, 28); and
- the locking step (222) includes engaging at least two of the clutches (76, 77, 78) in the intermediate clutch set (75) to thereby prevent rotation of the first and second pluralities of shafts (21, 22, 23; 26, 28).

33. A method according to any of the claims 30 to 32 characterized in that the modulating step includes engaging at least one of the clutches (81, 82, 83) in the final clutch set (80).

34. A method according to any of the claims 30 to 33 characterized in that it also comprises the steps of :
- monitoring the rotational speed of the output shaft (20)(226); and
- when said speed has reached a desired value, unlocking the transmission (10) whereafter selecting the desired gear is effected.

35. A method according to claim 29 or 34 characterized in that selecting the desired gear (228) involves determining both the desired gear ratio and the direction.

36. A method according to claim 35 characterized in that the selecting step (228) effects rotation of the output shaft (20) in the direction opposite to the direction of rotation of this shaft (20) prior to the disconnecting step (220).

37. A method according to any of the claims 28 to 36 characterized in that the modulating step (224) includes applying a modulating actuation signal to said at least one clutch (8) to actuate said clutch (8) accordingly whereby the inertial energy transmitted by the output shaft (20) to the transmission (10) is dissipated through this at least one clutch (8).

38. A method according to any of the claims 1-27 characterized in that it also comprises steps for controlling deceleration of the output shaft (20) during downshifting of the transmission (10) into a desired gear; said deceleration controlling steps including :
- sensing the rate of rotation of the output shaft (20) , (250);
- comparing the sensed rate of rotation of the output shaft (20) to a lookup table (Table II) having stored therein rate of rotation limits corresponding to selected gear ratios of the transmission (252);
- downshifting the transmission (10) to the next lower gear ratio when the sensed rate of rotation of the output shaft (20) falls below the stored limit corresponding to the present gear ratio (256), and
- repeating the sensing, comparing and downshifting steps until the sensed rate of rotation of the output shaft (20) reaches a predetermined value, respectively the value corresponding to the desired gear.

39. A method according the claim 38 characterized in that it also comprises the steps of :
- pre-sensing the rate of rotation of the output shaft (20); and
- applying a decelerating strategy stored in the microprocessor (1) against said pre-sensed rate of rotation of the output shaft (20)(250); said decelerating strategy (250) permitting entering the steps of claim 37 only if the pre-sensed rate of rotation exceeds said predetermined value and permitting entering another deceleration routine stored in the microprocessor (1) when the pre-sensed rate of rotation falls below said predetermined value.

40. A method according to claim 39 characterized in that the applying step (250) is run before each repeating step.

41. A method according to any of the claims 38 to 40 characterized in that the stored rate of rotation limits correspond to a maximum speed for each respective gear that would not result in an overspeeding of the input shaft (15).

42. A method according to any of the claims 38 to 41 characterized in that it also comprises the step of generating signals representing the present gear ratio corresponding to the current rotational speed of the output shaft (20) and the desired gear ratio corresponding to the desired rotational speed of the output shaft (20) indicated by manipulation of the gearshift means (6).

43. A method according to any of the preceding claims characterized in that it also comprises steps for calibrating at least one of the clutches (8) (Figure 18) all of which are operably connected to a hydraulic system for effecting actuation thereof by an increase in hydraulic pressure applied thereto and as controlled through operation of the microprocessor (1); said calibrating steps (Figure 18) including :
- restraining the output shaft (20) from rotation;
- determining a reference input shaft speed (RPM) (303) ;
- applying an increment of hydraulic pressure to a selected one of the clutches (8) (304, 309) while all other appropriate clutches (8) of a particular gear are engaged to permit a transfer of rotation power from the input shaft (15) to the output shaft (20) through said selected clutch (8) when this selected clutch (8) becomes engaged;
- after said applying step (304, 309), sensing the current rotational speed of the input shaft (RPM1) (306, 311);
- after said sensing step (306, 311), comparing the current input shaft speed (RPM1) to the reference input shaft speed (RPM) (307, 312);
- repeating the applying, sensing and comparing steps (304, 309; 306, 311; 307, 312) until the current input shaft speed (RPM1) is less than the reference input shaft speed (RPM), thereby indicating that the input shaft (15) is being loaded; and
- storing in the microprocessor (1) a value corresponding to the hydraulic pressure required to start loading of the input shaft (15).

44. A method according to claim 43 characterized in that the determining step (303) is applied with the output shaft (30) disengaged from the input shaft (15) so that the reference input shaft speed (RPM) is determined without load being applied to the input shaft (15).

45. A method according to any of the claims 1 to 42 characterized in that it also comprises steps for calibrating at least one of the clutches (8) (Figure 19) all of which are operably connected to a hydraulic system for effecting actuation thereof by an increase in hydraulic pressure applied thereto and as controlled through operation of the microprocessor (1); said calibrating steps (Figure 19) including :
- engaging all clutches (8) except a selected clutch (8) in a selected gear to effect a transfer of rotation power from the input shaft (15) to the output shaft (20) through said selected clutch (8) when this selected clutch (8) becomes engaged ;
- applying an increment of hydraulic pressure to this selected clutch (8) (324) ;
- after said applying step (324), sensing for a rotational movement of the output shaft (20) (326);
- repeating the applying and sensing steps (324, 326) until the output shaft (20) begins rotational movement thereby indicating that the selected clutch (8) has been engaged sufficiently to start transmitting torque to the output shaft (20); and
- storing in the microprocessor (1) the value representing the hydraulic pressure required to start transmitting torque to the output shaft (20) (328).

46. A method according to any of the claims 43 to 45 characterized in that it further also comprises the step of waiting for an interval of time (305, 310/325) after each applying step (304, 309/324) to provide sufficient time for the incremental increase in hydraulic pressure to be manifested in a reduction of rotational speed of the input shaft (15), respectively a rotational movement of the output shaft (20).

47. A method according to any of the claims 43 to 46 characterized in that the value stored in the microprocessor (1) is subsequently utilized when effecting actuation of the selected clutch (8) during operation of the transmission (10).

48. A method according to any of the claims 43 to 47 characterized in that it also includes, prior to the first applying step (304, 324), reducing the hydraulic pressure applicable to the selected clutch (8) to a minimum pressure value (300, 301/320, 321).

49. A method according to any of the claims 43 to 48 characterized in that the hydraulic pressure to each clutch (8) is controlled by an electrically actuated solenoid valve operably connected to the electrical control system such that the value of the hydraulic pressure applied to each respective clutch (8) is proportionate to the electrical current applied to the corresponding solenoid valve from the electrical control system; said applying step (304, 309/324) including changing the amount of electrical current applied to the corresponding solenoid valve by a preselected increment.

50. A method according to claim 49 characterized in that the hydraulic pressure applied to each respective clutch (8) is inversely proportional to the amount of electrical current applied to the corresponding solenoid valve; said changing step including decrementing the amount of current applied to the corresponding solenoid valve by a preselected increment.

51. A method according to claim 50 when appended to claim 47 characterized in that the reducing step (300, 301/320, 321) includes energizing the solenoid valve corresponding to the selected clutch (8) with a maximum amount of current to provide a minimum hydraulic pressure to this clutch (8) (301, 321).

52. A method according to any of the claims 43, 44 and 46 to 51 when appended to claim 43 characterized in that it also comprises ending the calibration of the selected clutch (8) (308) if a reduction of the rotational speed of the input shaft (15) is found with respect to the reference input shaft speed (RPM) during the first application of the comparing step (307).

53. A method according to any of the claims 45 and 46 to 51 when appended to claim 45 characterized in that it also comprises :
- after the engaging step (321) and prior to the first applying step (324), searching for rotational movement of the output shaft (20)(323); and
- if rotational movement of the output shaft (20) is found during this searching step (323), ending the calibration of the selected clutch (8) (329).

54. A method according to claim 52 and 53 characterized in that it also comprises displaying an error message (308, 329) when the ending step is encountered to advise the operator that calibration of the selected clutch (8) cannot be effected without service thereto.

55. A method according to any of the claims 50, 51 and 52 to 54 when appended to claim 50 characterized in the solenoid valve of the selected clutch (8) is associated with a minimum electrical current value corresponding to a maximum application of hydraulic pressure to said clutch (8); said method further also including the step of ending the calibration of the selected clutch (8) if the value of the electrical current being applied to said solenoid valve is less than this minimum electrical current value (313, 314/327, 329).

56. A method according to claim 55 characterized in that it also comprises displaying an error message (314, 329) for the operator when said ending step (313, 314/327, 329) is encountered indicating that the calibration of the selected clutch (8) cannot be effected without service thereto.

57. A method according to claim 48 or any of the claims 49 to 56 when appended to claim 48 characterized that it also comprises, after the reducing step waiting an interval of time (302, 322) for the effect of the reducing step to manifest itself.

58. A method according to any of the claims 43 to 57 characterized in that the transmission (10) includes a plurality of final clutches (81, 82, 83) operably associated with the output shaft (20), said method being applied independently to each of the final clutches (81, 82, 83) so that the value representing the hydraulic pressure to effect an engagement of each of these final clutches (81, 82, 83) is stored in the microprocessor (1) for subsequent use in the operation of the transmission (10).

59. A method according to any of the preceding claims characterized in that both the input shaft (15) and the output shaft (20) have sensors (9, 5) associated therewith in operative communication with the micro-processor (1) to determine the respective rotational speeds thereof.

60. A method according to any of the preceding claims characterized in that the gearshift means comprises a gearshift lever (6) which is manually movable between a plurality of positions including said forward, reverse and neutral positions (F, R, N) and which is operable to actuate switches (4) to which the microprocessor (1) is responsive for controlling the clutches (8) in the transmission (10).

61. A method according to any of the preceding claims characterized in that the transmission is a vehicle transmission (10) operably coupled via the input shaft (15) to an engine (7) and via the output shaft (20) to ground engaging wheels operable to effect movement of the vehicle over the ground.

62. A vehicle having :
- a power source (7) providing operational power for the vehicle;
- a powershift transmission (10) operably coupled with the power source (7) to control the direction and speed of operation of the vehicle;
- an electronic controller (1) operably associated with the transmission (10) for effecting gear changes within this transmission (10); and
- a control mechanism operably connected to the electronic controller (1) to signal desired gear changes thereto; said control mechanism comprising a gearshift means (6) movable along a first path of travel between a forward position (F) corresponding to a desired forward direction of movement of the vehicle, a reverse position (R) corresponding to a desired reverse direction of movement of the vehicle and an intermediate neutral position (N) and said gearshift means (6), when in the forward or reverse positions (F, R) further also being movable along a second path of travel between an upshift sub-position (FUP, RUP) corresponding to a desired upshift gear change, a downshift sub-position (FDN, RDN) corresponding to a desired downshift gear change and an intermediate no-shift sub-position (F, R), and
characterized in that :
the gearshift means (6) further also is movable between an upshift sub-position (NUP) and a downshift sub-position (NDN) when in said neutral position (N) to preselect a desired gear; the arrangement being such that the gearshift means (6), when in said upshift sub-position (NUP) or said downshift sub-position (NDN), generates signals (126, 126') representing a desired upshift, respectively downshift gear change; said signals (126, 126') being stored by the electronic controller and being subsequently used to select said desired gear when the gearshift means (6) is moved to the forward position (F), respectively the reverse position (R).

63. A vehicle according to claim 62 characterized in that the gearshift means comprises a gearshift lever (6) which is linearly movable between the forward, neutral and reverse positions (F, N, R) along said first path and which further also is linearly movable along said second path between said upshift (FUP, NUP, RUP), no-shift and downshift (FDN, NDN, RDN) sub-positions at each respective one of said forward (F), neutral (N) and reverse (R) positions.

64. A vehicle according to claim 63 characterized in that the second path of movement of the gearshift lever (6) between the respective sub-positions (UP, DN) at each respective position (F, N, R) is substantially perpendicular to the first path of movement of the gearshift lever (6) between said respective positions (F, N, R).

65. A vehicle according to claim 63 or 64 characterized in that the gearshift lever (6) is provided with a latching means which is engageable when said gearshift lever (6) is in the neutral position (N) and which requires an unlatching thereof to permit this gearshift lever (6) to be moved to either the forward or reverse positions (F, R,)

66. A vehicle according to claim 65 characterized in that the gearshift lever (6) is movable between the sub-positions (NUP, NDN) corresponding to the neutral position (N) without requiring the unlatching of the latching means.

67. A vehicle according to claim 65 characterized in that the gearshift lever (6) is movable between the sub-positions (UP,-,DN) corresponding to any of the forward, neutral and reverse positions (F, N, R) without requiring manipulation of the latching means

68. A vehicle according to any of the claims 65 to 67 characterized in that the latching means is in the form of a lift collar operably connected to the gearshift lever (6) and supported therefrom.

69. A vehicle according to any of the claims 62 to 68 characterized in that the gearshift lever (6) is biased at each respective position (F, N, R) toward the no-shift sub-position with respect to movement thereof between the corresponding upshift and downshift sub-positions (FUP, FDN, NUP, NDN, RUP, RDN).

70. A vehicle according to any of the claims 62 to 69 characterized in that it further also comprises a digital readout (2') identifying the direction of movement and the gear number corresponding to the condition of the transmission (10) effected by operation of the electronic controller (1).

## Patentansprüche

1. Verfahren zur Steuerung des Betriebs eines kraftgeschalteten Getriebes (10) mit einer Eingangswelle (15), einer Ausgangswelle (20), einer Vielzahl von Zahnrädern (18, 31-33, 35-37, 41-43, 46-49, 51, 57, 61-63) in Antriebsbeziehung mit den Eingangs- und Ausgangswelle (15,20), und mit einer Vielzahl von Kupplungen (8/71-73, 76-78, 81-83), die betriebsmäßig den Eingangs- und Ausgangswellen (15, 20) und den Zahnrädern zugeordnet sind und selektiv einkuppelbar sind, um antriebsmäßig die Eingangswelle (15) mit der Ausgangswelle (20) zu kuppeln und um eine Änderung der Betriebsdrehzahl der Ausgangswelle (20) für eine vorgegebene Betriebsdrehzahl der Eingangswelle (15) zu bewirken, wobei das Getriebe (10) weiterhin ein elektrisches Steuergerät aufweist, das einen dem Getriebe (10) betriebsmäßig zugeordneten Mikroprozessor (1) zur Bewirkung von Gangwechseln in dem Getriebe (10) und einen Steuermechanismus einschließt, der betriebsmäßig mit dem Mikroprozessor (1) verbunden ist, um an diesen Signale für gewünschte Gangwechsel zu liefern, wobei der Steuermechanismus eine Gangschalteinrichtung (6) aufweist, die entlang einer ersten Bewegungsbahn zwischen einer Vielzahl von Stellungen unter Einschluß von Vorwärts-, Rückwärts- und Neutralstellungen (F, R, N) beweglich ist, wobei die Gangschalteinrichtung (6) weiterhin entlang einer zweiten Bewegungsbahn zwischen einer Hochschalt-Teilposition (FUP, RUP), die einem gewünschten Hochschalt-Gangwechsel entspricht, und einer Herunterschalt-Teilposition (FDN, RND) beweglich ist, die einem gewünschten Herunterschalt-Gangwechsel entspricht, wenn sich die Gangschalteinrichtung in der Vorwärts- oder Rückwärtsstellung (F, R) befindet, und wobei das Verfahren dadurch gekennzeichnet ist, daß es die folgenden Schritte umfaßt:
- Vorauswahl eines gewünschten Ganges durch Bewegen der Gangschalteinrichtung (6) zwischen einer Hochschalt-Teilstellung (NUP) und einer Herunterschalt-Teilstellung (NDN), wenn sich diese Gangschalteinrichtung in der Neutralstellung (N) befindet, um Signale (126, 126') zu erzeugen, die einen gewünschten Gang darstellen,
- Speichern dieser Signale (126, 126'), und
- Auswahl des gewünschten Ganges durch nachfolgendes Verwenden der gespeicherten, den gewünschten Gang darstellenden Signale (126, 126') zur selektiven Ansteuerung der Kupplungen (8), wenn die Gangschalteinrichtung (6) auf die Vorwärtsstellung (F) bzw. die Rückwärtsstellung (R) bewegt wird.

2. Verfahren nach Anspruch 1,
dadurch gekennzeichnet, daß der Vorauswahlschritt weiterhin den Schritt der selektiven Betätigung von Schaltern (4) zur Erzeugung der Signale (126, 126') einschließt.

3. Verfahren nach Anspruch 1 oder 2,
dadurch gekennzeichnet, daß die Signale (126, 126') einen gewünschten Vorwärtsgang darstellen.

4. Verfahren nach Anspruch 3,
dadurch gekennzeichnet, daß der Speicherschritt weiterhin den Schritt der Verwendung der gespeicherten Signale (126, 126') zur Erzeugung zweiter Signale zur Ansteuerung der Kupplungen (8) bei der Bewegung der Gangschalteinrichtung (6) auf die Rückwärtsstellung (R) derart einschließt, daß die zweiten Signale die Kupplungen (8) ansteuern, um den niedrigstmöglichen Rückwärtsgang auszuwählen, wenn der gewünschte Gang kleiner als der niedrigstmögliche Rückwärtsgang ist, oder um den höchstmöglichen Rückwärtsgang auszuwählen, wenn der gewünschte Gang größer als der höchstmögliche Rückwärtsgang ist.

5. Verfahren nach einem der vorhergehenden Ansprüche,
dadurch gekennzeichnet, daß es weiterhin die folgenden Schritte umfaßt:
- Festhalten der Gangschalteinrichtung (6) in einer vorgegebenen (RUP) der Stellungen, während der Zündschalter gedreht wird, um es dem Mikroprozessor (1) zu ermöglichen, in eine Vorwärts-/Rückwärts-Geschwindigkeitsverhältnis-Auswahlroutine einzutreten (Fig. 12),
- selektives Bewegen der Gangschalteinrichtung (6), während sich der Mikroprozessor (1) in der Routine befindet, um einen Verhältniswert (RATIO) zu erzeugen und diesen Wert (RATIO) in einem nicht-flüchtigen Speicher (164, 164'/Fig. 13) zu speichern,
- nachfolgendes Verwenden des Verhältniswertes (RATIO) und eines Vorwärtsgang-Wertes (FG), der durch die Bewegung der Gangschalteinrichtung (6) ausgewählt wurde, um auf diese Weise einen Rückwärtsgangwert (RG) zu gewinnen, der eine vorgegebene Beziehung zu dem Vorwärtsgangwert (FG) (190, Tabelle I) aufweist, und
- Erzeugen von Signalen aus dem Rückwärtsgangwert (RG), die den Kupplungen (8) zugeführt werden, um den Rückwärts-Schaltgang des Getriebes (10) (192) auszuwählen.

6. Verfahren nach Anspruch 5,
dadurch gekennzeichnet, daß es weiterhin die folgenden Schritte umfaßt:
- Verwenden des Verhältniswertes (RATIO) und eines Rückwärtsgangwertes (RG), der durch die Bewegung der Gangschalteinrichtung (6) ausgewählt wurde, um auf diese Weise einen Vorwärtsgangwert (FG) zu gewinnen, der eine vorgegebene Beziehung zu dem Rückwärtsgangwert (RG) (198/Tabelle I) aufweist, und
- Erzeugen von Signalen aus dem Vorwärtsgangwert (FG), die den Kupplungen (8) zugeführt werden, um den Vorwärts-Schaltgang des Getriebes (10) (199) auszuwählen.

7. Verfahren nach Anspruch 5,
dadurch gekennzeichnet, daß, wenn der Rückwärtsgangwert (RG) kleiner als der niedrigste Rückwärtsgang in dem Getriebe (10) ist, Signale an die Kupplungen (8) angelegt werden, um den niedrigsten Rückwärtsgang (R4) auszuwählen.

8. Verfahren nach Anspruch 5,
dadurch gekennzeichnet, daß, wenn der Rückwärtsgangwert (RG) größer als der höchste Rückwärtsgang des Getriebes (10) ist, Signale an die Kupplungen (8) zur Auswahl des höchsten Rückwärtsganges (R12) angelegt werden.

9. Verfahren nach einem der vorhergehenden Ansprüche,
dadurch gekennzeichnet, daß es weiterhin den Schritt des Einsprungs in eine Verhältnisanpaßroutine (Fig. 20A, 20B) in dem Mikroprozessor (1) zur Auswahl eines Ganges umfaßt, der ein Gangverhältnis aufweist, das im wesentlichen äquivalent zu dem Verhältnis ist, das von den jeweiligen Drehgeschwindigkeiten der Eingangs- und Ausgangswellen (15, 20) abgeleitet ist.

10. Verfahren nach Anspruch 9,
dadurch gekennzeichnet, daß der Einsprungschritt die folgenden Schritte umfaßt:
- Auskuppeln des Getriebes (10) derart, daß die Drehantriebsleistung nicht mehr von der Eingangswelle (15) zur Ausgangswelle (20) übertragen wird,
- Berechnung eines Verhältnisses (408, 432) der Drehgeschwindigkeit der Ausgangswelle (20) dividiert durch die Drehgeschwindigkeit der Eingangswelle (15), wodurch der ausgewählte Gang in dem Getriebe (10) ausgewählt wird, der ein Getriebeverhältnis aufweist, das im wesentlichen äquivalent zu dem berechneten Verhältnis ist,
- Erzeugen und Speichern von Signalen (410, 434), die den ausgewählten Gang darstellen, und
- nachfolgendes Verwenden der gespeicherten Signale zur selektiven Ansteuerung der Kupplungen (8), wenn das Getriebe (10) wieder eingekuppelt ist, um auf den ausgewählten Gang zu schalten.

11. Verfahren nach Anspruch 9 oder 10,
dadurch gekennzeichnet, daß es weiterhin die folgenden Schritte umfaßt:
- Lieferung von Signalen an den Mikroprozessor (1) für ein Hochschalten (402) oder ein Herunterschalten (404) des Getriebes (10), während sich der Mikroprozessor in der Verhältnisanpaßroutine (Fig. 20A) befindet, und
- Verlassen der Verhältnisanpaßroutine (Fig. 20A) und Eintreten in einer Gangauswahlroutine (Fig. 11) in dem Mikroprozessor (1), während die Gangschalteinrichtung (6) in der Neutralstellung (N) bleibt, um die Auswahl eines alternativen Ganges zu bewirken, der von dem Gang abweicht, der in der Verhältnisanpaßroutine (Fig. 20A) ausgewählt wurde.

12. Verfahren nach Anspruch 9 oder 10,
dadurch gekennzeichnet, daß es weiterhin die folgenden Schritte umfaßt:
- Lieferung von Signalen an den Mikroprozessor (1) für ein Hochschalten (424) oder ein Herunterschalten (426) des Getriebes (10), während sich der Mikroprozessor in der Verhältnisanpaßroutine (Fig. 20B) befindet,
- Aktivieren eines Zeitgebers (446) derart, daß dieser über ein vorgegebenes erstes Zeitintervall läuft,
- Verlassen der Verhältnisanpaßroutine (Fig. 20B) und Eintreten in eine Gangauswahlroutine (Fig. 11) in dem Mikroprozessor (1), um die Auswahl eines alternativen Ganges zu bewirken, der von dem Gang abweicht, der von der Verhältnisanpaßroutine (Fig. 20B) ausgewählt wurde, wobei der Schritt des Eintrittes in die Gangauswahlroutine lediglich dann erfolgt, wenn der Schritt des Verlassens der Verhältnisanpaßroutine vor dem Ablauf des ersten vorgegebenen Zeitintervalls erfolgt, und
- Verbleiben in der Verhältnisanpaßroutine (Fig. 20B), wenn das erste vorgegebene Zeitintervall vor dem Auftreten des Schrittes des Verlassens abläuft.

13. Verfahren nach Anspruch 11 oder 12,
dadurch gekennzeichnet, daß die Gangschalteinrichtung (6) auf Gangwechsel-Teilpositionen einstellbar ist, während sie sich in der Neutralstellung (N) befindet, wobei der Schritt der Lieferung von Signalen ein selektives Bewegen der Gangschalteinrichtung (6) in eine Gangwechselposition einschließt, um dem Mikroprozessor (1) Signale zur Bewirkung der Auswahl des alternativen Ganges zu liefern.

14. Verfahren nach Anspruch 13,
dadurch gekennzeichnet, daß die Gangwechsel-Teilpositionen eine Neutral-Hochschaltstellung (NUP) und eine Neutral-Herunterschaltstellung (NDN) einschließen.

15. Verfahren nach Anspruch 13 oder 14,
dadurch gekennzeichnet, daß die Gangschalteinrichtung (6) weiterhin auf Gangwechsel-Teilpositionen (FUP, FDN; RUP, RDN) einstellbar ist, während sie sich in den Vorwärts- oder Rückwärtsstellungen (F, R) befindet.

16. Verfahren nach einem der Ansprüche 11 bis 15,
dadurch gekennzeichnet, daß die Verhältnisanpaßroutine (Fig. 20A) nicht erneut in Betrieb gesetzt wird, bevor nicht die Gangschalteinrichtung (6) in die Neutralstellung (N) zurückbewegt wurde.

17. Verfahren nach einem der Ansprüche 11 bis 16,
dadurch gekennzeichnet, daß eine Bewegung der Gangschalteinrichtung (6) von der Neutralstellung (N) auf eine der Vorwärts- und Rückwärtsstellungen (F, R) eine Betätigung der Kupplungen (8) zum Einlegen des alternativen Ganges bewirkt.

18. Verfahren nach einem der Ansprüche 11 bis 17,
dadurch gekennzeichnet, daß das Getriebe (10) betriebsmäßig mit einem Kupplungspedal (3) verbunden ist, das betätigbar ist, um ein Auskuppeln von zumindestens einer der Kupplungen (8) zu bewirken, wenn es in die Auskuppelstellung bewegt wird, wobei der Mikroprozessor (1) in die Verhältnisanpaßroutine (Fig. 20A) eintritt, wenn sich das Kupplungspedal (3) in der Auskuppelstellung befindet.

19. Verfahren nach Anspruch 18,
dadurch gekennzeichnet, daß die Bewegung des Kupplungspedals (3) aus der Auskuppelposition heraus eine Betätigung der Kupplungen (8) zum Einlegen des alternativen Ganges bewirkt.

20. Verfahren nach Anspruch 18 oder 19,
dadurch gekennzeichnet, daß der Schritt des Verlassens nach der Bewegung der Gangschalteinrichtung (6) auf irgendeine Gangwechsel-Teilposition ausgeführt wird.

21. Verfahren nach Anspruch 20 unter direkter oder indirekter Rückbeziehung auf Anspruch 11,
dadurch gekennzeichnet, daß der Schritt des Verlassens erfolgt, wenn das Kupplungspedal (3) in eine Einkuppelstellung zurückbewegt wird, während sich die Gangschalteinrichtung (6) in der Vorwärts-(F) oder Rückwärts- (R)-Stellung befindet, und bevor das erste vorgegebene Zeitintervall abgelaufen ist.

22. Verfahren nach einem der Ansprüche 1 bis 8,
dadurch gekennzeichnet, daß es weiterhin die folgenden Schritte umfaßt:
- Auskuppeln des Getriebes (11) derart, daß die Drehantriebsleistung nicht von der Eingangswelle (15) auf die Ausgangswelle (20) übertragen wird,
- Anzeigen des vorher verwendeten Ganges (422),
- wenn ein Wechsel des angezeigten Ganges erwünscht ist, Auswahl eines Ganges durch selektives Bewegen der Gangschalteinrichtung (6) zur Lieferung von Signalen an den Mikroprozessor (1) für eine Auswahl eines gewünschten Ganges (424, 440; 426, 442),
- Aktivieren eines Zeitgebers, damit dieser für eine erste vorgegebene Zeitperiode (446) läuft, nach dem Auswahlschritt (424, 440; 426, 442),
- Anzeigen des gewünschten Ganges (444) nach dem Auswahlschritt (424, 440; 426, 442),
- wenn der Auswahlschritt nicht gewünscht ist oder wenn das erste Zeitintervall abläuft, während das Getriebe (10) noch ausgekuppelt bleibt, Berechnen eines Verhältnisses der Drehgeschwindigkeit der Ausgangswelle (20) dividiert durch die Drehgeschwindigkeit der Eingangswelle (15) und Bestimmen eines gewählten Ganges in dem Getriebe (10), der ein Getriebeverhältnis aufweist, das im wesentlichen äquivalent zu dem berechneten Verhältnis (432) ist,
- Anzeigen des gewählten Ganges nach den Berechnungs- und Bestimmungsschritten (432), und
- erneutes Einkuppeln des Getriebes (10) zum Schalten auf den angezeigten Gang.

23. Verfahren nach Anspruch 22,
dadurch gekennzeichnet, daß der Auskuppelschritt dadurch bewirkt werden kann, daß die Gangschalteinrichtung (6) auf die Neutralstellung (N) bewegt wird.

24. Verfahren nach Anspruch 22 oder 23,
dadurch gekennzeichnet, daß der Wiedereinkuppelschritt durch eine Bewegung der Gangschalteinrichtung (6) auf die Vorwärts- oder Rückwärtsstellungen (F, R) bewirkt wird.

25. Verfahren nach einem der Ansprüche 22 bis 24,
dadurch gekennzeichnet, daß das Getriebe (10) betriebsmäßig mit einem Kupplungspedal (3) verbunden ist, das betätigbar ist, um den Auskuppelschritt durch Auskuppeln von zumindestens einer der Kupplungen (8) in dem Getriebe (10) bei einer Bewegung dieses Kupplungspedals (3) in eine Auskuppelstellung zu bewirken.

26. Verfahren nach einem der Ansprüche 22 bis 25,
dadurch gekennzeichnet, daß es weiterhin nach dem Auskuppelschritt das Starten eines zweiten Zeitgebers (406, 428) umfaßt, damit dieser ein zweites vorgegebenes Zeitinterval vor dem Berechnungsschritt (432) läuft, wobei die Berechnungs- und Bestimmungsschritte (432) lediglich nach dem Ablauf des zweiten vorgegebenen Zeitintervalls erfolgen.

27. Verfahren nach einem der Ansprüche 22 bis 26,
dadurch gekennzeichnet, daß die Schritte zwischen dem Schritt der Anzeige des vorher verwendeten Ganges (422) und dem Wiedereinkuppelschritt vor dem Auftreten des Wiedereinkuppelschrittes wiederholt werden können.

28. Verfahren nach einem der vorhergehenden Ansprüche,
dadurch gekennzeichnet, daß es weiterhin Schritte zur Steuerung der Abbremsung der Ausgangswelle (20) während des Herunterschaltens des Getriebes (10) auf einen gewünschten Gang bzw. während des Schaltens dieses Getriebes (10) von einem Vorwärtsgang auf einen Rückwärtsgang (FR) und umgekehrt auf einen gewünschten Gang umfaßt, wobei die Abbremssteuerschritte folgende Schritte umfassen:
- zunächst selektives Ansteuern der Kupplungen (8) zur Auswahl eines niedrigen Ganges (204) und
- nachfolgend und vor der selektiven Ansteuerung der Kupplungen (8) zum Einlegen des gewünschten Ganges, modulieren von zumindestens einer der Kupplungen (8), um auf diese Weise die Drehgeschwindigkeit der Ausgangswelle (20) (206) abzubremsen.

29. Verfahren nach Anspruch 28,
dadurch gekennzeichnet, daß
- es weiterhin den Schritt der Überwachung der Drehgeschwindigkeit der Ausgangswelle (20) (208) umfaßt, und
- die Auswahl des gewünschten Ganges nur dann bewirkt wird, wenn die Drehgeschwindigkeit der Ausgangswelle (20) einen vorgegebenen Wert (214) erreicht hat.

30. Verfahren nach einem der Ansprüche 1 bis 27,
dadurch gekennzeichnet, daß es weiterhin Schritte zur Steuerung der Abbremsung der Ausgangswelle (20) während des Herunterschaltens des Getriebes (10) auf einen gewünschten Gang bzw. während des Schaltens dieses Getriebes (10) von einem Vorwärtsgang in einen Rückwärtsgang (FR) und umgekehrt auf einen gewünschten Gang umfaßt, wobei die Abbremssteuerschritte folgende Schritte einschließen:
- Trennen des Getriebes (10) von der Eingangswelle (15) (220),
- Blockieren des Getriebes (10), um eine Drehung der Zahnräder in dem Getriebe zu verhindern, und
- nachfolgend und vor dem selektiven Ansteuern der Kupplungen (8) zum Einlegen des gewünschten Ganges Modulieren von zumindestens einer der Kupplungen (8) zur Abbremsung der Drehgeschwindigkeit der Ausgangswelle (20) auf einen vorgegebenen Wert (224).

31. Verfahren nach Anspruch 30,
dadurch gekennzeichnet, daß
- die Kupplungen (8) einen Anfangs-Kupplungssatz (70) mit einer Vielzahl von Kupplungen (71, 72, 73) zum selektiven Verbinden der Eingangswelle (15) in einer Antriebsbeziehung mit einer ersten Vielzahl von Wellen (21, 22, 23) sowie einen End-Kupplungssatz (80) mit einer Vielzahl von Kupplungen (81, 82, 83) zum selektiven Verbinden einer zweiten Vielzahl von Wellen (26, 28) in Antriebsbeziehung mit der Ausgangswelle (20) einschließen, und
- der Trennschritt (220) das Lösen aller Kupplungen (71, 72, 73) in dem Anfangs-Kupplungssatz (70) zum Trennen der Eingangswelle (15) von der ersten Vielzahl von Wellen (21, 22, 23) einschließt.

32. Verfahren nach Anspruch 31,
dadurch gekennzeichnet, daß
- die Kupplungen (8) weiterhin einen Zwischen-Kupplungssatz (75) mit einer Vielzahl von Kupplungen (76, 77, 78) zum selektiven Verbinden der ersten Vielzahl von Wellen (21, 22, 23) in Antriebsbeziehung mit der zweiten Vielzahl von Wellen (26, 28) einschließen, und
- der Blockierschritt (222) das Einkuppeln von zumindestens zwei der Kupplungen (76, 77, 78) in dem Zwischen-Kupplungssatz (75) einschließt, um auf diese Weise eine Drehung der ersten und zweiten Vielzahlen von Wellen (21, 22, 23; 26, 28) zu verhindern.

33. Verfahren nach einem der Ansprüche 30 bis 32, dadurch gekennzeichnet, daß der Modulationsschritt das Einkuppeln von zumindestens einer der Kupplungen (81, 82, 83) in dem End-Kupplungssatz (80) einschließt.

34. Verfahren nach einem der Ansprüche 30 bis 33,
dadurch gekennzeichnet, daß es außerdem die folgenden Schritte umfaßt:
- Überwachen der Drehgeschwindigkeit der Ausgangswelle (20) (226), und
- wenn die Drehzahl einen gewünschten Wert erreicht hat, Aufheben der Blockierung des Getriebes (10), worauf die Auswahl des gewünschten Ganges bewirkt wird.

35. Verfahren nach Anspruch 29 oder 34,
dadurch gekennzeichnet, daß die Auswahl des gewünschten Ganges (228) die Bestimmung sowohl des gewünschten Getriebeverhältnisses als auch der Richtung umfaßt.

36. Verfahren nach Anspruch 35,
dadurch gekennzeichnet, daß der Auswahlschritt (228) die Drehung der Ausgangswelle (20) in der Richtung bewirkt, die entgegengesetzt zur Drehrichtung dieser Welle (20) vor dem Trennschritt (220) ist.

37. Verfahren nach einem der Ansprüche 28 bis 36,
dadurch gekennzeichnet, daß der Modulationsschritt (224) das Anlegen eines modulierenden Betätigungssignals an die zumindestens eine Kupplung (8) zur entsprechenden Betätigung der Kupplung (8) einschließt, wodurch die Trägheitsenergie, die von der Ausgangswelle (20) auf das Getriebe (10) übertragen wird, durch diese zumindestens eine Kupplung (8) verbraucht wird.

38. Verfahren nach einem der Ansprüche 1 bis 27,
dadurch gekennzeichnet, daß es weiterhin Schritte zur Steuerung der Abbremsung der Ausgangswelle (20) während des Herunterschaltens des Getriebes (10) auf einen gewünschten Gang umfaßt, wobei die Abbremssteuerschritte folgende Schritte einschließen:
- Messen der Drehgeschwindigkeit der Ausgangswelle (25), (250),
- Vergleichen der gemessenen Drehgeschwindigkeit der Ausgangswelle (20) mit einer Nachschlagetabelle (Tabelle II), in der Drehgeschwindigkeitsgrenzen gespeichert sind, die ausgewählten Getriebeverhältnissen des Getriebes (252) entsprechen,
- Herunterschalten des Getriebes (10) auf das nächstniedrigere Getriebeverhältnis, wenn die gemessene Drehgeschwindigkeit der Ausgangswelle (20) unter den gespeicherten Grenzwert abfällt, der dem derzeitigen Getriebeverhältnis (256) entspricht, und
- Wiederholen der Meß-, Vergleichs- und Herunterschaltschritte, bis die gemessene Drehgeschwindigkeit der Ausgangswelle (20) einen vorgegebenen Wert bzw. den dem gewünschten Gang entsprechenden Wert erreicht.

39. Verfahren nach Anspruch 38,
dadurch gekennzeichnet, daß es außerdem die folgenden Schritte umfaßt:
- Vorausmessung der Drehgeschwindigkeit der Ausgangswelle (20), und
- Anwenden einer in dem Mikroprozessor (1) gespeicherten Abbremsstrategie auf die vorausgemessene Drehgeschwindigkeit der Ausgangswelle (20) (250), wobei die Abbremsstrategie (250) den Eintritt in die Schritte nach Anspruch 37 nur dann zuläßt, wenn die vorausgemessene Drehgeschwindigkeit den vorgegebenen Wert übersteigt, während sie den Eintritt in eine andere in dem Mikroprozessor (1) gespeicherte Abbremsroutine ermöglicht, wenn die vorausgemessene Drehgeschwindigkeit unter den vorgegebenen Wert abfällt.

40. Verfahren nach Anspruch 39,
dadurch gekennzeichnet, daß der Anwendungsschritt (250) vor jedem Wiederholungsschritt durchlaufen wird.

41. Verfahren nach einem der Ansprüche 38 bis 40,
dadurch gekennzeichnet, daß die gespeicherten Drehgeschwindigkeits-Grenzwerte einer maximalen Drehgeschwindigkeit für jeden jeweiligen Gang entsprechen, die nicht zu einem Überdrehen der Eingangswelle (15) führen würde.

42. Verfahren nach einem der Ansprüche 38 bis 41,
dadurch gekennzeichnet, daß es weiterhin den Schritt der Erzeugung von Signalen umfaßt, die das derzeitige Getriebeverhältnis, das der derzeitigen Drehgeschwindigkeit der Ausgangswelle (20) entspricht, und das gewünschte Getriebeverhältnis darstellen, das der gewünschten Drehgeschwindigkeit der Ausgangswelle (20) entspricht, die durch die Betätigung der Gangschalteinrichtung (60) angezeigt ist.

43. Verfahren nach einem der vorhergehenden Ansprüche,
dadurch gekennzeichnet, daß es weiterhin Schritte zur Eichung von zumindestens einer der Kupplungen (8) (Fig. 18) umfaßt, die alle betriebsmäßig mit einem Hydrauliksystem zur Durchführung einer Betätigung der Kupplungen durch einen Anstieg des diesen zugeführten Hydraulikdruckes verbunden sind, der durch den Betrieb des Mikroprozessors (1) gesteuert wird, wobei die Eichschritte (Fig. 18) folgende Schritte einschließen:
- Festhalten der Ausgangswelle (20) gegen eine Drehung,
- Bestimmen einer Bezugs-Eingangswellendrehzahl (RPM) (303),
- Anlegen eines Hydraulikdruck-Vergrößerungsschrittwertes an eine ausgewählte der Kupplungen (8) (304, 309), während alle anderen passenden Kupplungen (8) eines bestimmten Ganges eingekuppelt sind, um eine Übertragung von Drehantriebsleistung von der Eingangswelle (15) zur Ausgangswelle (20) über die ausgewählte Kupplung (8) zu ermöglichen, wenn diese ausgewählte Kupplung (8) eingekuppelt wird,
- Messen der derzeitigen Drehgeschwindigkeit der Eingangswelle (RPM1) (306, 311) nach dem Schritt des Anlegens (304, 309),
- Vergleichen der derzeitigen Eingangswellendrehzahl (RPM1) mit der Bezugs-Eingangswellendrehzahl (RPM) (307, 312) nach dem Meßschritt (306, 311),
- Wiederholen der Schritte des Anlegens, des Messens und des Vergleichens (304, 309; 306, 311; 307, 312), bis die derzeitige Eingangswellendrehzahl (RPM1) kleiner als die Bezugs-Eingangswellendrehzahl (RPM) ist, wodurch angezeigt wird, daß die Eingangswelle (15) belastet wird, und
- Speichern eines Wertes in dem Mikroprozessor (1), der dem Hydraulikdruck entspricht, der erforderlich ist, um die Belastung der Eingangswelle (15) beginnen zu lassen.

44. Verfahren nach Anspruch 43,
dadurch gekennzeichnet, daß der Bestimmungsschritt (303) bei von der Eingangswelle (15) entkuppelter Ausgangswelle (30) durchgeführt wird, so daß die Bezugs-Eingangswellendrehzahl (RPM) bestimmt wird, ohne daß eine Last an die Eingangswelle (15) angelegt wird.

45. Verfahren nach einem der Ansprüche 1 bis 42,
dadurch gekennzeichnet, daß es weiterhin Schritte zur Eichung von zumindestens einer der Kupplungen (8) (Fig. 19) umfaßt, die alle betriebsmäßig mit einem Hydrauliksystem zur Bewirkung einer Betätigung der Kupplungen durch einen Anstieg des diesen zugeführten Hydraulikdruckes unter der Steuerung durch den Betrieb des Mikroprozessors (1) verbunden sind, wobei die Eichschritte (Fig. 19) folgende Schritte einschließen:
- Einkuppeln aller Kupplungen (8) mit Ausnahme einer ausgewählten Kupplung (8) in einem ausgewählten Gang, um eine Übertragung von Antriebsleistung von der Eingangswelle (15) zur Ausgangswelle (20) über die ausgewählte Kupplung (8) zu bewirken, wenn diese ausgewählte Kupplung (8) eingekuppelt wird,
- Anlegen eines Hydraulikdruck-Vergrößerungsschrittwertes an diese ausgewählte Kupplung (8) (324),
- Messen einer Drehbewegung der Ausgangswelle (20) (326) nach dem Schritt des Anlegens (324),
- Wiederholen der Schritte des Anlegens und Messens (324, 326), bis die Ausgangswelle (20) ihre Drehbewegung beginnt, wodurch angezeigt wird, daß die ausgewählte Kupplung (8) ausreichend weit eingekuppelt wurde, um die Übertragung eines Drehmomentes an die Ausgangswelle (20) beginnen zu lassen, und
- Speichern des Wertes, der den Hydraulikdruck darstellt, der erforderlich ist, um die Übertragung des Drehmomentes auf die Ausgangswelle (20) (328) beginnen zu lassen, in dem Mikroprozessor (1).

46. Verfahren nach einem der Ansprüche 43 bis 45,
dadurch gekennzeichnet, daß es weiterhin den Schritt des Wartens für ein Zeitintervall (305, 310/325) nach jedem Schritt des Anlegens (304, 309/324) umfaßt, um eine ausreichende Zeit vorzusehen, damit der Vergrößerungsschrittwert des Hydraulikdruckes sich in einer Verringerung der Drehgeschwindigkeit der Eingangswelle (15) bzw. einer Drehbewegung der Ausgangswelle (20) äußern kann.

47. Verfahren nach einem der Ansprüche 43 bis 46,
dadurch gekennzeichnet, daß der in dem Mikroprozessor (1) gespeicherte Wert nachfolgend verwendet wird, wenn eine Betätigung der ausgewählten Kupplung (8) während des Betriebs des Getriebes (10) bewirkt wird.

48. Verfahren nach einem der Ansprüche 43 bis 47,
dadurch gekennzeichnet, daß es weiterhin vor dem ersten Schritt des Anlegens (304, 324) die Verringerung des Hydraulikdruckes, der an die ausgewählte Kupplung (8) anzulegen ist, auf einen minimalen Druckwert (300, 301/320, 321) einschließt.

49. Verfahren nach einem der Ansprüche 43 bis 48,
dadurch gekennzeichnet, daß der Hydraulikdruck an jede Kupplung (8) durch ein elekterisch betätigtes Magnetspulenventil gesteuert ist, das betriebsmäßig mit dem elektrischen Steuersystem derart verbunden ist, daß der Wert des an jede jeweilige Kupplung (8) angelegten Hydraulikdruckes proportional zu dem elektrischen Strom ist, der von dem elektrischen Steuersystem an das entsprechende Magnetspulenventil angelegt wird, und daß der Schritt des Anlegens (304, 309/324) die Änderung der Größe des dem entsprechenden Magnetspulenventil zugeführten elektrischen Stromes um einen vorher ausgelegten Schrittwert einschließt.

50. Verfahren nach Anspruch 49,
dadurch gekennzeichnet, daß der jeder jeweiligen Kupplung (8) zugeführte Hydraulikdruck umgekehrt proportional zur Größe des elektrischen Stromes ist, der an das entsprechende Magnetspulenventil angelegt wird, und daß der Schritt des Änderns das schrittweise Verkleinern der Größe des Stromes, der dem entsprechenden Magnetspulenventil zugeführt wird, um einen vorher ausgewählten Schrittwert einschließt.

51. Verfahren nach Anspruch 50 unter Rückbeziehung auf Anspruch 47,
dadurch gekennzeichnet, daß der Schritt des Verringerns (300, 301/320, 321) die Ansteuerung des der ausgewählten Kupplung (8) entsprechenden Magnetspulenventils mit einem maximalen Wert des Stromes einschließt, um einen minimalen Hydraulikdruck an diese Kupplung (8) (301, 321) anzulegen.

52. Verfahren nach einem der Ansprüche 43, 44 und 46 bis 51 unter Rückbeziehung auf Anspruch 43,
dadurch gekennzeichnet, daß es weiterhin die Beendigung der Eichung der ausgewählten Kupplung (8) (308) umfaßt, wenn eine Verringerung der Drehgeschwindigkeit der Eingangswelle (15) gegenüber der Bezugs-Eingangswellendrehgeschwindigkeit (RPM) während der ersten Ausführung des Schrittes des Vergleichens (307) festgestellt wird.

53. Verfahren nach einem der Ansprüche 45 und 46 bis 51 unter Rückbeziehung auf Anspruch 45,
dadurch gekennzeichnet, daß es weiterhin die folgenden Schritte umfaßt:
- Überprüfung einer Drehbewegung der Ausgangswelle (20) (323) nach dem Schritt des Einkuppelns (321) und vor dem ersten Schritt des Anlegens (324), und,
- Beendigung der Eichung der ausgewählten Kupplung (8) (329), wenn eine Drehbewegung der Ausgangswelle (20) während dieses Überprüfungsschrittes (323) festgestellt wird.

54. Verfahren nach Anspruch 52 und 53,
dadurch gekennzeichnet, daß es weiterhin die Anzeige einer Fehlernachricht (308, 329) umfaßt, wenn der Beendigungsschritt aufgetreten ist, um den Fahrer darüber zu unterrichten, daß eine Eichung der ausgewählten Kupplung (8) nicht ohne Wartung dieser Kupplung durchgeführt werden kann.

55. Verfahren nach einem der Ansprüche 50, 51 und 52 bis 54 unter Rückbeziehung auf Anspruch 50,
dadurch gekennzeichnet, daß dem Magnetspulenventil der ausgewählten Kupplung (8) ein minimaler elektrischer Stromwert zugeordnet ist, der einer maximalen Zuführung des Hydraulikdruckes an die Kupplung (8) entspricht, wobei das Verfahren weiterhin den Schritt der Beendigung der Eichung der ausgewählten Kupplung (8) einschließt, wenn der Wert des an das Magnetspulenventil angelegten elektrischen Stromes kleiner als dieser minimale elektrische Stromwert (313, 314/327, 329) ist.

56. Verfahren nach Anspruch 55,
dadurch gekennzeichnet, daß es weiterhin die Anzeige einer Fehlernachricht (314, 329) für den Fahrer umfaßt, wenn der Beendigungsschritt (313, 314/327, 329) auftritt, was anzeigt, daß die Eichung der ausgewählten Kupplung (8) nicht ohne Wartung dieser Kupplung durchgeführt werden kann.

57. Verfahren nach Anspruch 48 oder einem der Ansprüche 49 bis 56 unter Rückbeziehung auf Anspruch 48,
dadurch gekennzeichnet, daß es außerdem nach dem Schritt der Verringerung das Warten darauf, daß die Wirkung des Verringerungsschrittes sich äußert, über ein Zeitintervall (302, 322) umfaßt.

58. Verfahren nach einem der Ansprüche 43 bis 57,
dadurch gekennzeichnet, daß das Getriebe (10) eine Vielzahl von End-Kupplungen (81, 82, 83) einschließt, die der Ausgangswelle (20) betriebsmäßig zugeordnet sind, daß das Verfahren unabhängig auf jede der End-Kupplungen (81, 82, 83) angewandt wird, so daß der Wert, der den Hydraulikdruck darstellt, um ein Einkuppeln dieser End-Kupplungen (81, 82, 83) zu bewirken, in dem Mikroprozessor (1) für eine nachfolgende Verwendung bei dem Betrieb des Getriebes (10) gespeichert wird.

59. Verfahren nach einem der vorhergehenden Ansprüche,
dadurch gekennzeichnet, daß sowohl der Eingangswelle (15) als auch der Ausgangswelle (20) Sensoren (9, 5) zugeordnet sind, die betriebsmäßig mit dem Mikroprozessor (1) verbunden sind, um die jeweiligen Drehgeschwindigkeiten dieser Wellen zu bestimmen.

60. Verfahren nach einem der vorhergehenden Ansprüche,
dadurch gekennzeichnet, daß die Gangschalteinrichtung einen Gangschalthebel (6) umfaßt, der manuell zwischen einer Vielzahl von Stellungen beweglich ist, die die Vorwärts-, Rückwärts- und Neutralstellungen (F, R, N) einschließen, und der betätigbar ist, um Schalter (4) zu betätigen, auf die der Mikroprozessor (1) zur Steuerung der Kupplungen (8) in dem Getriebe (10) anspricht.

61. Verfahren nach einem der vorhergehenden Ansprüche,
dadurch gekennzeichnet, daß das Getriebe ein Fahrzeug-Getriebe (10) ist, das betriebsmäßig über die Eingangswelle (15) mit einem Motor (7) und über die Ausgangswelle mit mit dem Boden in Eingriff stehenden Rädern gekoppelt ist, die betreibbar sind, um eine Bewegung des Fahrzeugs über dem Boden zu bewirken.

62. Fahrzeug mit:
- einer Leistungsquelle (7), die Betriebsleistung für das Fahrzeug liefert,
- einem kraftgeschalteten Getriebe (10), das betriebsmäßig mit der Leistungsquelle (7) verbunden ist, um die Betriebsrichtung und -geschwindigkeit des Fahrzeuges zu steuern,
- einem elektronischen Steuergerät (1), das betriebsmäßig mit dem Getriebe (10) verbunden ist, um Gangwechsel in diesem Getriebe (10) zu bewirken, und
- einem Steuermechanismus, der betriebsmäßig mit dem elektronischen Steuergerät (1) verbunden ist, um Signale für gewünschte Gangwechsel an diesen zu liefern, wobei der Steuermechanismus eine Gangschalteinrichtung (6) umfaßt, die entlang einer ersten Bewegungsbahn zwischen einer Vorwärtsstellung (F), die einer gewünschten Vorwärtsbewegungsrichtung des Fahrzeuges entspricht, einer Rückwärtsstellung (R), die einer gewünschten Rückwärtsbewegungsrichtung des Fahrzeuges entspricht, und einer dazwischenliegenden Neutralstellung (N) beweglich ist, wobei die Gangschalteinrichtung (6) in den Vorwärts- oder Rückwärtsstellungen (F, R) weiterhin entlang einer zweiten Bewegungsbahn zwischen einer Hochschalt-Teilposition (FUP, RUP), die einem gewünschten Hochschalt-Gangwechsel entspricht, einer Herunterschalt-Teilposition (FDN, RDN), die einem gewünschten Herunterschalt-Gangwechsel entspricht, und einer zwischenliegenden, kein Schalten darstellenden Teilposition (F, R) beweglich ist, dadurch gekennzeichnet, daß:
die Gangschalteinrichtung (6) weiterhin zwischen einer Hochschalt-Teilposition (NUP) und einer Herunterschalt-Teilposition (NDN) beweglich ist, wenn sie sich in der Neutralstellung (N) befindet, um einen gewünschten Gang vorauszuwählen, wobei die Anordnung derart ist, daß die Gangschalteinrichtung (6), wenn sie sich in der Hochschalt-Teilposition (NUP) oder der Herunterschalt-Teilposition (NDN) befindet, Signale (126, 126') erzeugt, die einen gewünschten Hochschalt- bzw. Herunterschalt-Gangwechsel darstellen, wobei die Signale (126, 126') von dem elektronischen Steuergerät gespeichert und nachfolgend dazu verwendet werden, einen gewünschten Gang auszuwählen, wenn die Gangschalteinrichtung (6) in die Vorwärtsstellung (F) bzw. die Rückwärtsstellung (R) bewegt wird.

63. Verfahren nach Anspruch 62,
dadurch gekennzeichnet, daß die Gangschalteinrichtung einen Gangschalthebel (6) umfaßt, der geradlinig zwischen den Vorwärts-, Neutral- und Rückwärtsstellungen (F, N, R) entlang der ersten Bahn beweglich ist und der weiterhin ebenfalls geradlinig entlang der zweiten Bewegungsbahn zwischen den Hochschalt- (FUP, NUP, RUP), schaltfreien und Herunterschalt- (FDN, NDN, RDN) Teilpositionen in jeder jeweiligen der Vorwärts- (F), Neutral- (N) und Rückwärts- (R) Positionen beweglich ist.

64. Fahrzeug nach Anspruch 63,
dadurch gekennzeichnet, daß die zweite Bewegungsbahn des Gangschalthebels (6) zwischen den jeweiligen Teilpositionen (UP, DN) an jeder jeweiligen Position (F, N, R) im wesentlichen senkrecht zur ersten Bewegungsbahn des Gangschalthebels (6) zwischen den jeweiligen Positionen (F, N, R) ist.

65. Fahrzeug nach Anspruch 63 oder 64,
dadurch gekennzeichnet, daß der Gangschalthebel (6) mit einer Verriegelungseinrichtung versehen ist, die einrückbar ist, wenn der Gangschalthebel (6) sich in der Neutralstellung (N) befindet, und die eine Entriegelung erfordert, um eine Bewegung dieses Gangschalthebels (6) auf eine der Vorwärts- oder Rückwärtsstellungen (F, R) zu ermöglichen.

66. Fahrzeug nach Anspruch 65,
dadurch gekennzeichnet, daß der Gangschalthebel (6) zwischen den Teilpositionen (NUP, NDN), die der Neutralstellung (N) entsprechen, beweglich ist, ohne daß eine Entriegelung der Verriegelungseinrichtung erforderlich ist.

67. Fahrzeug nach Anspruch 65,
dadurch gekennzeichnet, daß der Gangschalthebel (6) zwischen den Teilpositionen (UP, DN), die einer der Vorwärts-, Neutral- und Rückwärtsstellungen (F, N, R) entsprechen, beweglich ist, ohne daß eine Betätigung der Verriegelungseinrichtungen erforderlich ist.

68. Fahrzeug nach einem der Ansprüche 65 bis 67,
dadurch gekennzeichnet, daß die Verriegelungseinrichtung die Form eines Anhebekragens aufweist, der betriebsmäßig mit dem Gangschalthebel (6) verbunden und von diesem gehaltert ist.

69. Fahrzeug nach einem der Ansprüche 62 bis 68,
dadurch gekennzeichnet, daß der Gangschalthebel (6) an jeder jeweiligen Stellung (F, N, R) in Richtung auf die schaltfreie Teilposition bezüglich seiner Bewegung zwischen den entsprechenden Hochschalt- und Herunterschalt-Teilpositionen (FUP, FDN, NUP, NDN, RUP, RDN) vorgespannt ist.

70. Fahrzeug nach einem der Ansprüche 62 bis 69,
dadurch gekennzeichnet, daß es weiterhin eine Digitalanzeige (2') umfaßt, die die Bewegungsrichtung und den Gang identifiziert, die dem Zustand des Getriebes (10) entspricht, der durch den Betrieb des elektronischen Steuergerätes (1) bewirkt wird.

## Revendications

1. Méthode de contrôle de l'opération d'une transmission (10) de puissance à changement de vitesse présentant un arbre d'entrée (15), un arbre de sortie (20), une pluralité de pignons (18, 31-33, 35-37, 41-43, 46-49, 51, 57, 61-63) en relation d'entraînement avec les arbres d'entrée et de sortie (15, 20) et une pluralité de disques d'embrayage (8/71-73, 76-78, 81-83) associés fonctionnellement avec les arbres d'entrée et de sortie (15, 20) et avec lesdits pignons, et pouvant être engagés sélectivement afin d'accoupler à entraînement l'arbre d'entrée (15) à l'arbre de sortie (20) et pour effectuer une variation de la vitesse d'opération de l'arbre de sortie (20) pour une vitesse d'opération donnée de l'arbre d'entrée (15); ladite transmission (10) présentant en outre un régulateur électronique comprenant un microprocesseur (1) associé fonctionnellement avec la transmission (10) pour effectuer des changements de vitesse au sein de cette transmission (10) et un mécanisme de contrôle connecté fonctionnellement au microprocesseur (1) pour signaler à celui-ci des changements de vitesse désirés; ledit mécanisme de contrôle comprenant des moyens de changement de vitesse (6) manoeuvrables le long d'une première grille de déplacement entre une pluralité de positions, comprenant des positions de marche arrière, de marche avant et neutre (F, R, N), et lesdits moyens de changement de vitesse (6), lorsqu'en position de marche avant ou en position de marche arrière (F, R) étant en outre manoeuvrables le long d'une deuxième grille de déplacement entre une position secondaire de montée de vitesse (FUP, RUP), correspondant à un changement désiré de montée de vitesse, et une position secondaire de descente de vitesse (FDN, RDN) correspondant à un changement désiré de descente de vitesse, et
ladite méthode étant caractérisée en ce qu'elle comprend les étapes de:
- présélection d'une vitesse désirée en déplaçant les moyens de changement de vitesse (6) entre une position secondaire de montée de vitesse (NUP) et une position secondaire de descente de vitesse (NDN), lorsque dans ladite position neutre (N), pour générer des signaux (126, 126') représentant une vitesse désirée,
- mémorisation desdits signaux (126, 126'), et
- sélection de ladite vitesse désirée en utilisant ensuite les signaux (126, 126') mémorisés représentant la vitesse désirée pour mettre sélectivement sous tension les disques d'embrayage (8) lorsque les moyens de changement de vitesse (6) sont déplacés vers la position de marche avant (F) ou vers la position de marche arrière (R).

2. Méthode selon la revendication 1, caractérisée en ce que l'étape de présélection comprend en outre l'étape d'activation sélective de commutateurs (4) pour générer lesdits signaux (126, 126').

3. Méthode selon les revendications 1 ou 2, caractérisée en ce que lesdits signaux (126, 126') représentent une vitesse de marche avant désirée.

4. Méthode selon la revendication 3, caractérisée en ce que l'étape de mémorisation comprend en outre l'étape d'utilisation desdits signaux (126, 126') mémorisés pour générer des deuxièmes signaux afin de mettre sous tension les disques d'embrayage (8) lorsque lesdits moyens de changement de vitesse (6) sont déplacés vers la position de marche arrière (R) en manière telle que lesdits deuxièmes signaux mettent les disques d'embrayage (8) sous tension afin de sélectionner la vitesse de marche arrière la plus basse possible lorsque ladite vitesse désirée est inférieure à la vitesse de marche arrière la plus basse possible ou pour sélectionner la vitesse de marche arrière la plus haute possible lorsque ladite vitesse désirée est supérieure à la vitesse de marche arrière la plus élevée possible.

5. Méthode selon l'une quelconque des revendications précédentes, caractérisée en ce qu'elle comprend également les étapes de:
- maintient des moyens de changement de vitesse (6) dans une position préalablement déterminée (RUP) parmi lesdites positions tout en tournant la clé de contact afin de permettre au microprocesseur (1) d'introduire une routine de sélection de rapport de vitesse de marche avant à vitesse de marche arrière (figure 12);
- déplacement sélectif desdits moyens de changement de vitesse (6) pendant que le microprocesseur (1) se trouve dans ladite routine pour générer une valeur de rapport (RATIO) et mémorisation de ladite valeur (RATIO) dans une mémoire permanente (164, 164'/figure 13);
- utilisation ensuite de ladite valeur de rapport (RATIO) et d'une valeur de vitesse de marche avant (FG) sélectionnée par le mouvement des moyens de changement de vitesse (6) pour obtenir ainsi une valeur de vitesse de marche arrière (RG) apportant une relation préalablement déterminée à ladite valeur de vitesse de marche avant (FG) (190, tableau I); et
- génération, au départ de ladite valeur de vitesse de marche arrière (RG), de signaux qui sont appliqués aux disques d'embrayage (8) pour sélectionner la vitesse de marche arrière de la transmission (10) (192).

6. Méthode selon la revendication 5, caractérisée en ce qu'elle comprend également les étapes de:
- utilisation de ladite valeur de rapport (RATIO) et d'une valeur de vitesse de marche arrière (RG) sélectionnée par le mouvement des moyens de changement de vitesse (6) pour obtenir ainsi une valeur de vitesse de marche avant (FG) apportant une relation préalablement déterminée à ladite valeur de vitesse de marche arrière (RG) (198/tableau 1); et
- génération, au départ de ladite valeur de vitesse de marche avant (FG), de signaux qui sont appliqués aux disques d'embrayage (8) afin de sélectionner la vitesse de marche avant de la transmission (10) (199).

7. Méthode selon la revendication 5, caractérisée en ce que, si la valeur de vitesse de marche arrière (RG) est inférieure à la vitesse de marche arrière la plus basse dans la transmission (10), des signaux sont appliqués aux disques d'embrayage (8) pour sélectionner la vitesse de marche arrière la plus basse (R4).

8. Méthode selon la revendication 5, caractérisée en ce que, si la valeur de vitesse de marche arrière (RG) est supérieure à la vitesse de marche arrière la plus élevée dans la transmission (10), des signaux sont appliqués aux disques d'embrayage (8) pour sélectionner la vitesse de marche arrière la plus élevée (R12).

9. Méthode selon l'une quelconque des revendications précédentes, caractérisée en ce qu'elle comprend également l'étape d'introduction d'une routine d'adaptation du rapport (figures 20A, 20B) dans le microprocesseur (1) pour sélectionner une vitesse présentant un rapport de vitesse substantiellement équivalent au rapport dérivé des vitesses de rotation respectives des arbres d'entrée et de sortie (15, 20).

10. Méthode selon la revendication 9, caractérisée en ce que ladite étape d'introduction comprend les étapes de:
- débrayage de la transmission (10) de manière à ce que la force de rotation ne soit pas transférée de l'arbre d'entrée (15) vers l'arbre de sortie (20);
- calcul d'un rapport (408, 432) de la vitesse de rotation de l'arbre de sortie (20) divisée par la vitesse de rotation de l'arbre d'entrée (15), déterminant ainsi ladite vitesse sélectionnée à l'intérieur de la transmission (10) qui a un rapport de vitesse substantiellement équivalent au rapport calculé;
- génération et mémorisation de signaux (410, 434) représentatifs de ladite vitesse sélectionnée; et
- utilisation ensuite des signaux mémorisés pour mettre sous tension sélective les disques d'embrayage (8) lorsque la transmission (10) est à nouveau embrayée pour passer à la vitesse sélectionnée.

11. Méthode selon la revendication 9 ou 10, caractérisée en ce qu'elle comprend également les étapes de:
- signalisation au microprocesseur (1) d'une montée (402) ou d'une descente (404) de vitesse de la transmission (10) tandis qu'il est engagé dans ladite routine d'adaptation du rapport (figure 20A); et
- sortie de ladite routine d'adaptation du rapport (figure 20A) et introduction dans une routine de sélection de vitesse (figure 11) dans le microprocesseur (1) tandis que les moyens de changement de vitesse (6) restent dans la position neutre (N) pour effectuer une sélection d'une vitesse alternative autre que ladite vitesse sélectionnée par la routine d'adaptation du rapport (figure 20A).

12. Méthode selon les revendications 9 ou 10, caractérisée en ce qu'elle comprend également les étapes de:
- signalisation au microprocesseur (1) d'une montée (424) ou d'une descente (426) de vitesse de la transmission (10) tandis qu'il est engagé dans ladite routine d'adaptation (figure 20A);
- activation d'un dispositif chronologique (446) pour qu'il fonctionne pendant un premier laps de temps préalablement déterminé;
- sortie de ladite routine d'adaptation du rapport (figure 20B) et entrée d'une routine de sélection de vitesse (figure 11) dans le microprocesseur (1) pour effectuer une sélection d'une vitesse alternative autre que ladite vitesse sélectionnée par la routine d'adaptation du rapport (figure 20B); ladite étape d'introduction n'ayant lieu que si l'étape de sortie a lieu avant l'expiration dudit premier laps de temps préalablement déterminé, et
- maintient dans la routine d'adaptation du rapport (figure 20B) si le premier laps de temps préalablement déterminé expire avant que ne se produise l'étape de sortie.

13. Méthode selon la revendication 11 ou 12, caractérisée en ce que les moyens de changement de vitesse (6) peuvent être positionnés dans des positions secondaires de changement de vitesse lorsqu'en position neutre (N); ladite étape de signalisation comprenant un déplacement sélectif des moyens de changement de vitesse (6) dans une position de changement de vitesse pour signalisation au microprocesseur (1) afin qu'il effectue la sélection de ladite vitesse alternative.

14. Méthode selon la revendication 13, caractérisée en ce que lesdites positions secondaires de changement de vitesse comprennent une position de montée neutre (NUP) et une position de descente neutre (NDN).

15. Méthode selon la revendication 13 ou 14, caractérisée en ce que les moyens de changement de vitesse (6) peuvent également être positionnés dans des positions secondaires de changement de vitesse (FUP, FDN; RUP, RDN) tout en étant dans les positions de marche avant ou de marche arrière (F, R).

16. Méthode selon l'une quelconque des revendications 11 à 15, caractérisée en ce que la routine d'adaptation du rapport (figure 20A) n'est pas engagée à nouveau avant que les moyens de changement de vitesse (6) soient retournés à la position neutre (N).

17. Méthode selon l'une quelconque des revendications 11 à 16, caractérisée en ce qu'un mouvement des moyens de changement de vitesse (6) de la position neutre (N) vers soit la position de marche avant, soit la position de marche arrière (F, R) provoque une manipulation des disques d'embrayage (8) pour qu'ils embrayent ladite vitesse alternative.

18. Méthode selon l'une quelconque des revendications 11 à 17, caractérisée en ce que la transmission (10) est associée fonctionnellement à la pédale d'embrayage (3), qui peut être actionnée pour provoquer le débrayage d'au moins l'un des disques d'embrayage (8) lorsqu'elle est mise dans une position de débrayage; ledit microprocesseur (1) introduisant la routine d'adaptation de rapport (figure 20A) lorsque la pédale d'embrayage (3) est dans ladite position de débrayage.

19. Méthode selon la revendication 18, caractérisée en ce que le mouvement de la pédale d'embrayage (3) au départ de la position de débrayage provoque une manipulation des disques d'embrayage (8) pour qu'ils embrayent ladite vitesse alternative.

20. Méthode selon la revendication 18 ou 19, caractérisée en ce que l'étape de sortie est effectuée après que les moyens de changement de vitesse (6) soient déplacés vers n'importe quelle position secondaire de changement de vitesse.

21. Méthode selon la revendication 20, lorsque associée directement ou indirectement à la revendication 11, caractérisée en ce que l'étape de sortie a lieu lorsque la pédale d'embrayage (3) est ramenée à une position d'embrayage, tandis que les moyens de changement de vitesse (6) sont en position de marche avant (F) ou de marche arrière (R), et avant expiration dudit premier laps de temps préalablement déterminé.

22. Méthode selon l'une quelconque des revendications 1 à 8, caractérisée en ce qu'elle comprend également les étapes de:
- désembrayage de la transmission (10) de manière à ce que la force de rotation ne soit pas transférée au départ de l'arbre d'entré (15) vers l'arbre de sortie (12);
- affichage de la vitesse préalablement utilisée (422);
- si une modification de la vitesse affichée est désirée, sélection d'une vitesse en déplaçant sélectivement les moyens de changement de vitesse (6) pour signaler au microprocesseur (1) une sélection d'une vitesse désirée (424, 440; 426, 442);
- après ladite étape de sélection (424, 440; 426, 442), activation d'un dispositif chronologique pour fonctionnement pendant un premier laps de temps déterminé (446);
- après ladite étape de sélection (424, 440; 426, 442), affichage de ladite vitesse désirée (444);
- si ladite étape de sélection n'est pas désirée, ou si ledit premier laps de temps expire tandis que la transmission (10) reste désembrayée, calcul d'un rapport de la vitesse de rotation de l'arbre de sortie (20) divisée par la vitesse de rotation de l'arbre d'entrée (15) et désignation d'une vitesse choisie au sein de la transmission (10), présentant un rapport de vitesse substantiellement équivalent au rapport calculé (432);
- après les étapes de calcul et de désignation (432), affichage de la vitesse choisie; et
- nouvel embrayage de la transmission (10) pour passer à la vitesse affichée.

23. Méthode selon la revendication 22, caractérisée en ce que l'étape de débrayage peut être effectuée en déplaçant les moyens de changement de vitesse (6) vers la position neutre (N).

24. Méthode selon la revendication 22 ou 23, caractérisée en ce que l'étape de nouvel embrayage est effectuée par un passage des moyens de changement de vitesse (6) vers la position de marche avant ou la position de marche arrière (F, R).

25. Méthode selon l'une quelconque des revendications 22 à 24, caractérisée en ce que la transmission (10) est associée fonctionnellement avec une pédale d'embrayage (3) actionnable pour effectuer ladite étape de désembrayage en désembrayant au moins l'un des disques d'embrayage (8) dans la transmission (10) suite au mouvement de cette pédale d'embrayage (3) vers une position de débrayage.

26. Méthode selon l'une quelconque des revendications 22 à 25, caractérisée en ce qu'elle comprend de plus, après l'étape de débrayage, le démarrage d'un deuxième dispositif chronologique (406, 428) pour un deuxième laps de temps préalablement déterminé, avant l'étape de calcul (423); lesdites étapes de calcul et de désignation (432) étant réalisées uniquement après expiration dudit deuxième laps de temps préalablement déterminé.

27. Méthode selon l'une quelconque des revendications 22 à 26, caractérisée en ce que les étapes entre l'étape d'affichage de la vitesse préalablement utilisée (422) et l'étape de nouvel embrayage peut être répétée avant réalisation de ladite étape de nouvel embrayage.

28. Méthode selon l'une quelconque des revendications précédentes, caractérisée en ce qu'elle comprend également des étapes de contrôle de la décélération de l'arbre de sortie (20) pendant la descente de vitesse de la transmission (10) dans une vitesse désirée, ou pendant le passage de la transmission (10) de la marche avant vers la marche arrière (F, R) et vice-versa dans une vitesse désirée; lesdites étapes de contrôle de la décélération comprenant:
- premièrement, la mise sous tension sélective des disques d'embrayage (8) pour sélectionner une basse vitesse (204); et
- ensuite et avant la mise sous tension sélective des disques d'embrayage (8) pour établir la vitesse désirée, la modulation d'au moins l'un des disques d'embrayage (8) pour décélérer ainsi la vitesse de rotation de l'arbre de sortie (20) (206).

29. Méthode selon la revendication 28, caractérisée en ce que:
- elle comprend également l'étape de surveillance de la vitesse de rotation de l'arbre de sortie (20) (208); et
- la vitesse désirée n'est sélectionnée que lorsque la vitesse de rotation de l'arbre de sortie (20) a atteint la valeur préalablement déterminée (214).

30. Méthode selon l'une quelconque des revendications 1 à 27, caractérisée en ce qu'elle comprend également des étapes de contrôle de la décélération de l'arbre de sortie (20) pendant la descente de vitesse de la transmission (10) dans une vitesse désirée, ou pendant le passage de cette transmission (10) de la marche avant vers la marche arrière (F, R) et vice-versa dans une vitesse désirée; lesdites étapes de contrôle de la décélération comprenant:
- la dissociation de la transmission (10) de l'arbre d'entrée (15) (220);
- le verrouillage de la transmission (10) pour empêcher la rotation des pignons qu'elle contient; et
- après et avant la mise sous tension sélective des disques d'embrayage (8) pour établir la vitesse désirée, la modulation d'au moins l'un des disques d'embrayage (8) pour décélérer la vitesse de rotation de l'arbre de sortie (20) à une valeur préalablement déterminée (224).

31. Méthode selon la revendication 30, caractérisée en ce que:
- les disques d'embrayage (8) comprennent un jeu de disques d'embrayage initiaux (70) présentant une pluralité de disques d'embrayage (71, 72, 73) pour associer sélectivement l'arbre d'entrée (15) en relation d'entraînement avec une première pluralité d'arbres (21, 22, 23) et un jeu de disques d'embrayage terminaux (80) présentant une pluralité de disques d'embrayage (81, 82, 83) pour associer sélectivement une deuxième pluralité d'arbres (26, 28) en relation d'entraînement avec l'arbre de sortie (20); et
- l'étape de dissociation (220) comprend le relâchement de tous les disques d'embrayage (71, 72, 73) dans le jeu de disques d'embrayage initiaux (70) pour dissocier l'arbre d'entrée (15) de ladite première pluralité d'arbres (21, 22, 23).

32. Méthode selon la revendication 31, caractérisée en ce que:
- les disques d'embrayage (8) comprennent en outre un jeu de disques d'embrayage intermédiaires (75) présentant une pluralité de disques d'embrayage (76, 77, 78) pour associer sélectivement la première pluralité d'arbres (21, 22, 23) en relation d'entraînement avec la deuxième pluralité d'arbres (26, 28); et
- l'étape de verrouillage (222) comprenant l'embrayage d'au moins deux des disques d'embrayage (76, 77, 78) dans le jeu de disques d'embrayage intermédiaires (75) pour empêcher ainsi la rotation de la première et de la deuxième pluralité d'arbres (21, 22, 23; 26, 28).

33. Méthode selon l'une quelconque des revendications 30 à 32, caractérisée en ce que l'étape de modulation comprend l'embrayage d'au moins l'un des disques d'embrayage (81, 82, 83) dans le jeu de disques d'embrayage terminaux (80).

34. Méthode selon l'une quelconque des revendications 30 à 33, caractérisée en ce qu'elle comprend également les étapes de:
- surveillance de la vitesse de rotation de l'arbre de sortie (20) (226); et
- lorsque ladite vitesse a atteint une valeur désirée, déverrouillage de la transmission (10), après quoi une sélection d'une vitesse désirée est effectuée.

35. Méthode selon la revendication 29 ou 34, caractérisée en ce que la sélection de la vitesse désirée (228) implique la détermination du rapport de vitesse désiré ainsi que de la direction.

36. Méthode selon la revendication 35, caractérisée en ce que l'étape de sélection (228) provoque la rotation de l'arbre de sortie (20) dans la direction opposée à la direction de rotation de cet arbre (20) avant l'étape de dissociation (220).

37. Méthode selon l'une quelconque des revendications 28 à 36, caractérisée en ce que l'étape de modulation (224) comprend l'application d'un signal d'activation de modulation vers ledit au moins un disque d'embrayage (8) pour actionner ledit disque d'embrayage (8) de manière correspondante, grâce à quoi l'énergie d'inertie transmise par l'arbre de sortie (20) vers la transmission (10) est dissipée via ce au moins un disque d'embrayage (8).

38. Méthode selon l'une quelconque des revendication 1-27, caractérisée en ce qu'elle comprend également les étapes de contrôle de la décélération de l'arbre de sortie (20) pendant la descente de vitesse de la transmission (10) dans une vitesse désirée; lesdites étapes de contrôle de décélération comprenant:
- la détection de la vitesse de rotation de l'arbre d'entrée (20), (250);
- la comparaison de la vitesse de rotation détectée de l'arbre de sortie (20) avec un tableau de contrôle (tableau II) dans lequel sont mémorisées des limites de vitesse de rotation correspondant aux rapports de vitesse sélectionnés de la transmission (252);
- la descente de vitesse de la transmission (10) au prochain rapport de vitesse inférieur lorsque la vitesse de rotation détectée à l'arbre de sortie (20) tombe en-dessous de la limite mémorisée correspondant au rapport de vitesse en cours (256), et
- la répétition des étapes de détection, de comparaison et de diminution de vitesse jusqu'à ce que la vitesse de rotation détectée à l'arbre de sortie (20) atteigne soit une valeur déterminée préalablement, soit la valeur correspondant à la vitesse désirée.

39. Méthode selon la revendication 38, caractérisée en ce qu'elle comprend également les étapes de:
- détection préalable de la vitesse de rotation de l'arbre de sortie (20); et
- application d'une stratégie de décélération mémorisée dans le microprocesseur (1) selon ladite vitesse de rotation détectée préalablement de l'arbre de sortie (20) (250); ladite stratégie de décélération (250) ne permettant l'introduction des étapes de la revendication 37 que si la vitesse de rotation détectée préalablement dépasse ladite valeur déterminée préalablement et permettant d'introduire une autre routine de décélération mémorisée dans le microprocesseur (1) lorsque la vitesse de rotation détectée préalablement tombe en-dessous d'une valeur déterminée préalablement.

40. Méthode selon la revendication 39, caractérisée en ce que l'étape d'application (250) est exécutée avant chaque étape de répétition.

41. Méthode selon l'une quelconque des revendications 38 à 40, caractérisée en ce que les limites de vitesse de rotation mémorisées correspondent à une vitesse maximum pour chaque vitesse respective, qui ne provoque pas de survitesse de l'arbre d'entrée (15).

42. Méthode selon l'une quelconque des revendications 38 à 41, caractérisée en ce qu'elle comprend également les étapes de génération de signaux représentant le rapport de vitesse en cours correspondant à la vitesse de rotation en cours de l'arbre de sortie (20) et le rapport de vitesse désiré correspondant à la vitesse de rotation désirée pour l'arbre de sortie (20) indiquée par la manipulation des moyens de changement de vitesse (6).

43. Méthode selon l'une quelconque des revendications précédentes, caractérisée en ce qu'elle comprend également les étapes de calibration d'au moins l'un des disques d'embrayage (8) (figure 18), qui sont tous associés fonctionnellement à un système hydraulique, pour effectuer l'activation de celui-ci par une augmentation de la pression hydraulique appliquée à celui-ci et tel que contrôlé par l'opération du microprocesseur (1); lesdites étapes de calibrage (figure 18) comprenant:
- la retenue de l'arbre de sortie (20) pour l'empêcher de tourner;
- la détermination d'une vitesse de référence de l'arbre d'entrée (RPM) (303);
- l'application d'une augmentation de pression hydraulique à un disque sélectionné parmi les disques d'embrayage (8) (304, 309), tandis que tous les autres disques d'embrayage (8) appropriés d'une vitesse particulière sont embrayés pour permettre un transfert de la force de rotation de l'arbre d'entrée (15) vers l'arbre de sortie (20) via ledit disque d'embrayage (8) sélectionné lorsque ce disque d'embrayage (8) est embrayé;
- après ladite étape d'application (304, 309), la détection de la vitesse de rotation en cours de l'arbre d'entrée (RPM1) (306, 311)
- Après ladite étape de détection (306, 311), la comparaison de la vitesse en cours de l'arbre d'entrée (RPM1) à la vitesse de référence de l'arbre d'entrée (RPM) (307, 312);
- la répétition des étapes d'application, de détection et de comparaison (304, 309; 306, 311; 307, 312) jusqu'à ce que la vitesse en cours de l'arbre d'entrée (RPM1) soit inférieure à la vitesse de référence de l'arbre d'entrée (RPM), ce qui indique que l'arbre d'entré (15) est mis sous charge; et
- la mémorisation dans le microprocesseur (1) d'une valeur correspondant à la pression hydraulique requise pour démarrer la mise sous charge de l'arbre d'entrée (15).

44. Méthode selon la revendication 43, caractérisée en ce que l'étape de détermination (303) est appliquée avec l'arbre de sortie (20) dissocié de l'arbre d'entrée (15) de manière à ce que la vitesse de référence de l'arbre d'entrée (RPM) soit déterminée sans qu'une charge soit appliquée à l'arbre d'entrée (15).

45. Méthode selon l'une quelconque des revendications 1 à 42, caractérisée en ce qu'elle comprend également les étapes pour la calibration d'au moins l'un des disques d'embrayage (8) (figure 19), qui sont tous associés fonctionnellement à un système hydraulique, pour effectuer l'activation de celui-ci par une augmentation de la pression hydraulique appliquée à celui-ci et tel que contrôlé par l'opération du microprocesseur (1); lesdites étapes de calibration (figure 19) comprenant:
- l'embrayage de tous les disques d'embrayage (8), excepté un disque d'embrayage (8) dans une vitesse sélectionnée pour effectuer un transfert de force de rotation de l'arbre d'entrée (15) vers l'arbre de sortie (20) au moyen dudit disque d'embrayage (8) sélectionné lorsque ce disque d'embrayage (8) sélectionné est embrayé;
- l'application d'une augmentation de la pression hydraulique vers ce disque d'embrayage (8) sélectionné (324);
- après ladite étape d'application (324), la détection d'un mouvement de rotation de l'arbre de sortie (20) (326);
- la répétition des étapes d'application et de détection (324, 326) jusqu'à ce que l'arbre de sortie (20) commence un mouvement de rotation, indiquant ce faisant que le disque d'embrayage (8) sélectionné a été suffisamment embrayé pour commencer la transmission d'un couple à l'arbre de sortie (20); et
- la mémorisation, dans le microprocesseur (1), de la valeur représentant la pression hydraulique requise pour commencer la transmission d'un couple à l'arbre de sortie (20) (328).

46. Méthode selon l'une quelconque des revendications 43 à 45, caractérisée en ce qu'elle comprend également l'étape d'attendre un laps de temps (305, 310/325) après chaque étape d'application (304, 309/324) pour laisser suffisamment de temps pour que l'augmentation de pression hydraulique se manifeste par une réduction de la vitesse de rotation de l'arbre de sortie (15) ou par un mouvement de rotation de l'arbre de sortie (20).

47. Méthode selon l'une quelconque des revendications 43 à 46, caractérisée en ce que la valeur mémorisée dans le microprocesseur (1) est ensuite utilisée au moment d'effectuer l'activation du disque d'embrayage (8) pendant l'opération de la transmission (10).

48. Méthode selon l'une quelconque des revendications 43 à 47, caractérisée en ce qu'elle comprend également la réduction, avant la première étape d'application (304, 324), de la pression hydraulique à appliquer au disque d'embrayage (8) sélectionné à une valeur de pression minimale (300, 301/320, 321).

49. Méthode selon l'une quelconque des revendications 43 à 48, caractérisée en ce que la pression hydraulique vers chaque disque d'embrayage (8) est contrôlée par une électrovanne actionnée électriquement électrovanne et associée fonctionnellement au système de commande électrique en manière telle que la valeur de la pression hydraulique appliquée à chaque disque d'embrayage (8) individuel est proportionnel au courant électrique appliqué à l'électrovanne correspondante au départ du système de commande électrique; ladite étape d'application (304, 309/324) comprenant une modification de la quantité de courant électrique appliqué à l'électrovanne correspondante selon un incrément présélectionné.

50. Méthode selon la revendication 49, caractérisée en ce que la pression hydraulique appliquée à chaque disque d'embrayage (8) individuel est inversement proportionnelle à la quantité de courant électrique appliqué à l'électrovanne correspondante; ladite étape de modification comprenant une diminution de la quantité de courant appliquée à l'électrovanne correspondante selon un incrément présélectionné.

51. Méthode selon la revendication 50, lorsque associée à la revendication 47, caractérisée en ce que l'étape de réduction (300, 301/320, 321) comprend la mise sous tension de l'électrovanne correspondant au disque d'embrayage (8) sélectionné, avec une quantité maximale de courant afin de réaliser une pression hydraulique minimale vers ce disque d'embrayage (8) (301, 321).

52. Méthode selon l'une quelconque des revendications 43, 44 et 46 à 51, lorsque associée à la revendication 43, caractérisée en ce qu'elle comprend également l'interruption de la calibration du disque d'embrayage (8) sélectionné (308) si une réduction de la vitesse de rotation de l'arbre d'entrée (15) est détectée par rapport à la vitesse de référence de l'arbre d'entrée (RPM) durant la première application de l'étape de comparaison (307).

53. Méthode selon l'une quelconque des revendication 45 et 46 à 51, lorsque associée à la revendication 45, caractérisée en ce qu'elle comprend également:
- après l'étape d'embrayage (321) et avant la première étape d'application (324), la recherche d'un mouvement de rotation de l'arbre de sortie (20) (323); et
- si un mouvement de rotation de l'arbre de sortie (20) est détecté pendant l'étape de recherche (323), l'interruption de la calibration du disque d'embrayage (8) sélectionné (329).

54. Méthode selon la revendication 52 et 53, caractérisée en ce qu'elle comprend également l'affichage d'un message d'erreur (308, 329) lorsque l'étape d'interruption se produit, afin de signaler à l'opérateur que la calibration du disque d'embrayage (8) sélectionné ne peut être effectuée sans le soumettre à un entretien.

55. Méthode selon l'une quelconque des revendications 50, 51 et 52 à 54, lorsque associée à la revendication 50, caractérisée en ce que l'électrovanne du disque d'embrayage (8) sélectionné est associée à une valeur minimale de courant électrique correspondant à une application maximale de pression hydraulique audit disque d'embrayage (8); ladite méthode comprenant en outre l'étape d'interruption de la calibration du disque d'embrayage (8) sélectionné si la valeur du courant électrique appliqué à ladite électrovanne est inférieure à cette valeur de courant électrique minimal (313, 314/327, 329).

56. Méthode selon la revendication 55, caractérisée en ce qu'elle comprend également l'affichage d'un message d'erreur (314, 329) pour l'opérateur lorsque ladite étape d'interruption (313, 314/327, 329) se produit, indiquant que la calibration du disque d'embrayage (8) sélectionné ne peut être effectuée sans le soumettre à un entretien.

57. Méthode selon la revendication 48 ou l'une quelconque des revendications 49 à 56, lorsque associée à la revendication 48, caractérisée en ce qu'elle comprend également, après l'étape de réduction et pendant un laps de temps (302, 322), l'attente que l'effet de l'étape de réduction se manifeste.

58. Méthode selon l'une quelconque des revendications 43 à 57, caractérisée en ce que la transmission (10) comprend une pluralité de disques d'embrayage terminaux (81, 82, 83) associés fonctionnellement à l'arbre de sortie (20), ladite méthode étant appliquée indépendamment à chaque disque d'embrayage terminal (81, 82, 83) de manière à ce que la valeur représentant la pression hydraulique permettant d'effectuer un embrayage de chacun de ces disques d'embrayage terminaux (81, 82, 83) est mémorisée dans le microprocesseur (1) opus utilisation ultérieure dans l'opération de la transmission (10).

59. Méthode selon l'une quelconque des revendications précédentes, caractérisée en ce que l'arbre d'entrée (15) ainsi que l'arbre de sortie (20) présentent tous deux des détecteurs (9, 5) associés à ceux-ci et en communication fonctionnelle avec le microprocesseur (1) pour déterminer les vitesses de rotation respectives de ceux-ci.

60. Méthode selon l'une quelconque des revendications précédentes, caractérisée en ce que les moyens de changement de vitesse comprennent un levier de changement de vitesse (6) qui est manoeuvrable manuellement entre une pluralité de positions comprenant lesdites positions de marche avant, de marche arrière et neutre (F, R, N) et utilisable pour actionner des commutateurs (4) auxquels répond le microprocesseur (1) pour commander les disques d'embrayage (8) de la transmission (10).

61. Méthode selon l'une quelconque des revendications précédentes, caractérisée en ce que la transmission est une transmission (10) de véhicule, associée fonctionnellement via l'arbre d'entrée (15) à un moteur (7) et via l'arbre de sortie (20) à des roues de prise au sol, utilisables pour effectuer un mouvement du véhicule sur le sol.

62. Véhicule présentant:
- une source de puissance (7) fournissant une puissance opérationnelle au véhicule;
- une transmission (10) de puissance à changement de vitesse associée fonctionnellement à la source de puissance (7) pour commander la direction et la vitesse d'opération du véhicule;
- un régulateur électronique (1) associé fonctionnellement à la transmission (10) pour effectuer des changements de vitesse dans cette transmission (10); et
- un mécanisme de contrôle associé fonctionnellement au régulateur électronique (1) pour signaler à ce dernier les changements de vitesse désirés; ledit mécanisme de contrôle comprenant des moyens de changement de vitesse (6) manoeuvrables le long d'une première grille entre une position de marche avant (F) correspondant à une direction désirée de marche avant du mouvement du véhicule, une position de marche arrière (R) correspondant à une direction désirée de marche arrière du véhicule, et une position neutre intermédiaire (N), et lesdits moyens de changement de vitesse (6), lorsqu'ils sont dans la position de marche avant ou de marche arrière (F, R), étant en outre manoeuvrables le long d'une deuxième grille de déplacement entre une position secondaire de descente de vitesse (FUP, RUP) correspondant à un changement désiré de montée de vitesse, une position secondaire de descente de vitesse (FDN, RDN) correspondant à un changement désiré de montée de vitesse et une position secondaire intermédiaire hors changement de vitesse (F, R), et
caractérisé en ce que:
les moyens de changement de vitesse (6) sont en outre manoeuvrables entre une position secondaire de montée de vitesse (NUP) et une position secondaire de descente de vitesse (NDN), lorsqu'ils sont dans ladite position neutre (N), pour présélectionner une vitesse désirée; le dispositif étant tel que les moyens de changement de vitesse (6), lorsqu'ils sont dans ladite position secondaire de montée de vitesse (NUP) ou dans ladite position secondaire de descente de vitesse (NDN), génèrent des signaux (126, 126') représentant respectivement un changement désiré en montée de vitesse ou en descente de vitesse; lesdits signaux (126, 126') étant mémorisés par le régulateur électronique et étant ensuite utilisés pour sélectionner ladite vitesse désirée lorsque les moyens d'embrayage (6) sont déplacés respectivement vers la position de marche avant (F) ou vers la position de marche arrière (R).

63. Véhicule selon la revendication 62, caractérisé en ce que les moyens de changement de vitesse comprennent un levier de changement de vitesse (6) qui est manoeuvrable de façon linéaire entre les positions de marche avant, neutre et de marche arrière (F, N, R) le long de ladite première grille, et qui est de plus manoeuvrable de façon linéaire le long de ladite deuxième grille entre lesdites positions de montée de vitesse (FUP, NUP, RUP), hors changement de vitesse et descente de vitesse (FDN, NDN, RDN) à chaque dite position de marche avant (F), neutre (N) et de marche arrière (R) correspondante.

64. Véhicule selon la revendication 63, caractérisé en ce que la deuxième grille de manoeuvre du levier de changement de vitesse (6) entre les différentes positions secondaires (UP, DN) à chaque position (F, N, R) respective est substantiellement perpendiculaire à la première grille de manoeuvre du levier de changement de vitesse (6) entre lesdites positions (F, N, R) respectives.

65. Véhicule selon la revendication 63 ou 64, caractérisé en ce que le levier de changement de vitesse (6) est muni de moyens de verrouillage qui peuvent être engagés lorsque ledit levier de changement de vitesse (6) est en position neutre (N) et qui requièrent qu'ils soient déverrouillés pour permettre que ce levier de changement de vitesse (6) soit manoeuvré vers les positions soit de marche avant, soit de marche arrière (F, R).

66. Véhicule selon la revendication 65, caractérisée en ce que le levier de changement de vitesse (6) est manoeuvrable entre les positions secondaires (NUP, NDN) correspondant à la position neutre (N) sans requérir le déverrouillage des moyens de verrouillage.

67. Véhicule selon la revendication 65, caractérisé en ce que le levier de changement de vitesse (6) est manoeuvrable entre les positions secondaires (UP,-,DN) correspondant à l'une quelconque des positions de marche avant, neutre et de marche arrière (F, N, R) sans requérir de manipulation des moyens de verrouillage.

68. Véhicule selon l'une quelconque des revendications 65 à 67, caractérisé en ce que les moyens de verrouillage ont la forme d'une bague de traction associée fonctionnellement au levier de changement de vitesse (6) et maintenue par celui-ci.

69. Véhicule selon l'une quelconque des revendications 62 à 68, caractérisé en ce que le levier de changement de vitesse (6) est décentré à chaque position (F, N, R) respective vers la position secondaire hors changement de vitesse, par rapport au mouvement de celui-ci entre les positions secondaires correspondantes de montée et de descente de vitesse (FUP, FDN, NUP, NDN, RUP, RDN).

70. Véhicule selon l'une quelconque des revendications 62 à 69, caractérisé en ce qu'il comprend en outre un affichage numérique (2') identifiant la direction de mouvement et le numéro de vitesse correspondant à la condition de la transmission (10) effectué par l'opération du régulateur électronique (1).
